(19) Europäisches Patentamt
European Patent Office
Office européen des brevets

(11) **EP 2 692 104 B1**

## (12) EUROPÄISCHE PATENTSCHRIFT

(45) Veröffentlichungstag und Bekanntmachung des Hinweises auf die Patenterteilung:
**06.05.2015 Patentblatt 2015/19**

(21) Anmeldenummer: **12708119.8**

(22) Anmeldetag: **05.03.2012**

(51) Int Cl.:
*H04L 27/20* (2006.01)      *H04L 25/03* (2006.01)
*H04L 25/06* (2006.01)      *H04L 27/233* (2006.01)

(86) Internationale Anmeldenummer:
**PCT/EP2012/053723**

(87) Internationale Veröffentlichungsnummer:
**WO 2012/130559 (04.10.2012 Gazette 2012/40)**

(54) **VERFAHREN UND VORRICHTUNG ZUR BESTIMMUNG EINER EXTRINSISCHEN INFORMATION**

METHOD AND APPARATUS FOR DETERMINING A PIECE OF EXTRINSIC INFORMATION

PROCÉDÉ ET DISPOSITIF POUR DÉTERMINER UNE INFORMATION EXTRINSÈQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.03.2011 DE 102011006565
04.07.2011 DE 102011078565**

(43) Veröffentlichungstag der Anmeldung:
**05.02.2014 Patentblatt 2014/06**

(73) Patentinhaber: **Rohde & Schwarz GmbH & Co. KG
81671 München (DE)**

(72) Erfinder:
• **DETERT, Thorben
80634 München (DE)**
• **VOLYANSKIY, Mikhail
86150 Augsburg (DE)**

(74) Vertreter: **Körfer, Thomas
Mitscherlich PartmbB
Patent- und Rechtsanwälte
Sonnenstrasse 33
80331 München (DE)**

(56) Entgegenhaltungen:
• **BARBIERI A ET AL: "Soft-Output Decoding of Rotationally Invariant Codes Over Channels With Phase Noise", IEEE TRANSACTIONS ON COMMUNICATIONS, IEEE SERVICE CENTER, PISCATAWAY, NJ. USA, Bd. 55, Nr. 11, 1. November 2007 (2007-11-01), Seiten 2125-2133, XP011197218, ISSN: 0090-6778, DOI: 10.1109/TCOMM.2007.908520 in der Anmeldung erwähnt**
• **GIANLUIGI FERRARI ET AL: "On Linear Predictive Detection for Communications With Phase Noise and Frequency Offset", IEEE TRANSACTIONS ON VEHICULAR TECHNOLOGY, IEEE SERVICE CENTER, PISCATAWAY, NJ, US, Bd. 56, Nr. 4, 1. Juli 2007 (2007-07-01), Seiten 2073-2085, XP011187970, ISSN: 0018-9545, DOI: 10.1109/TVT.2007.897190**
• **John Proakis: "Digital Communications", 1. Januar 2001 (2001-01-01), McGraw-Hill, New York, XP002676571, ISBN: 0-07-232111-3 Seiten 242-243, Equation 5.1-40**

EP 2 692 104 B1

**Beschreibung**

Die Erfindung betrifft ein Verfahren und eine Vorrichtung zur Bestimmung einer extrinsischen Information.

In einem Übertragungskanal, dessen Phasenübertragungsverhalten aufgrund von Phasenrauschen zeitveränderlich ist, werden zur exakten Detektion von Phase-Shift-Keying-(PSK)-modulierten Symbolen Pilotsymbole zur Schätzung der das zeitveränderliche Phasenübertragungsverhalten charakterisierenden Übertragungsfunktion des Übertragungskanals übertragen. Liegt eine Übertragung in kurzen Blöcken vor und ist in jedem Block eine Schätzung des Phasenübertragungsverhaltens notwendig, so verschlechtert eine derartige kohärente Detektion die Übertragungseffizienz erheblich und scheidet deshalb aus.

Bei einer nicht-kohärenten Detektion eines PSK-modulierten Symbols, insbesondere eines differenziell PSK-modulierten Symbols, erfolgt keine Übertragung von Pilotsymbolen. Stattdessen werden in der Detektion neben Schätzwerten für die einzelnen übertragenen PSK-modulierten Symbole zusätzlich Wahrscheinlichkeitsverteilungen der Phase des Übertragungskanals ermittelt, was zu einer Erhöhung der Komplexität der Detektion führt. In Barbieri A. et al. "Soft-Output Decoding of Rotationally Invariant Codes Over Channels with Phase Noise", IEEE Transactions on Communications, Vol. 55, No. 11, November 2007, Seiten 2125 bis 2133, wird ein rekursives Detektionsverfahren vorgestellt, das eine nicht-kohärente Detektion von differenziell M-PSK-modulierten Symbolen darstellt.

Aus dem Fachbuch John Proakis: "Digital Communications", 1. Januar 2001, McGraw-Hill, New York, ISBN: 0-07-232111-3, Seiten 242-243 sind verschiedene Vorgehensweisen zu dieser Thematik bekannt.

Dieses Detektionsverfahren ist nachteilig noch durch eine Vielzahl von Additionen, Multiplikationen und Divisionen gekennzeichnet, die eine Detektion von PSK-modulierten Symbolen in Echtzeit erschweren. Darüber hinaus ist dieses Detektionsverfahren durch einen großen dynamischen Bereich der zu berechnenden Werte gekennzeichnet, der eine Festkomma-Implementierung erschwert.

Aufgabe der Erfindung ist es deshalb, ein Verfahren und eine Vorrichtung zur echtzeitfähigen Detektion von differentiell phasenmodulierten Symbolen in einem phasenverrauschten Übertragungskanal zu entwickeln.

Die Aufgabe wird durch ein erfindungsgemäßes Verfahren zur Bestimmung einer extrinsischen Information mit den Merkmalen des Patentanspruchs 1 und durch eine erfindungsgemäße Vorrichtung zur Bestimmung einer extrinsischen Information mit den Merkmalen des Patentanspruchs 15 gelöst. Die Unteransprüche betreffen vorteilhafte Weiterbildungen. Patentanspruch 16 betrifft ein Computerprogramm. Patentanspruch 17 betrifft ein Computerprogramm-Produkt.

Hierzu wird für jeden Symbolzeitpunkt und jede Symbol-Hypothese jeweils eine zugehörige extrinsische Information ermittelt, die sich aus dem Verhältnis der a-posteriori-Wahrscheinlichkeit für die jeweilige Symbol-Hypothese im jeweiligen Symbolzeitpunkt bei gegebener Sequenz von Abtastwerten des Empfangssignals und der a-priori-Wahrscheinlichkeit für die jeweilige Symbol-Hypothese im jeweiligen Symbolzeitpunkt ergibt.

Die a-posteriori-Wahrscheinlichkeit für die jeweilige Symbol-Hypothese bei bekannter Sequenz von Abtastwerten des Empfangssignals weist auch eine Abhängigkeit von der a-posteriori-Wahrscheinlichkeit der Phase des Übertragungskanals bei bekannter Sequenz von Abtastwerten des Empfangssignals und bei Annahme eines positiv reell kodierten Symbols auf. Die Wahrscheinlichkeitsdichte der Phase des Übertragungskanals zu einem bestimmten Zeitpunkt wird bei bekannter Sequenz von Abtastwerten des Empfangssignals vom Beginn der Sequenz bis zum bestimmten Zeitpunkt und bei Annahme eines positiv reell kodierten Symbols als Summe von mit einem Gewichtungsfaktor jeweils gewichteten und von einem komplexen Koeffizienten und von der Phase des Übertragungskanals jeweils abhängigen Tikhonov-Verteilungen genähert. Analog wird die Wahrscheinlichkeitsdichte der Phase des Übertragungskanals zum bestimmten Zeitpunkt bei bekannter Sequenz von Abtastwerten des Empfangssignals vom bestimmten Zeitpunkt bis zum Ende der empfangenen Sequenz und bei Annahme eines positiv reell kodierten Symbols als Summe von mit einem Gewichtungsfaktor jeweils gewichteten und von einem komplexen Koeffizienten und von der Phase des Übertragungskanals jeweils abhängigen Tikhonov-Verteilungen genähert.

Mit dieser Näherung der Wahrscheinlichkeitsdichte der Phase des Übertragungskanals ergibt sich eine rekursive und damit eine in die industrielle Praxis umsetzbare Lösung zur Bestimmung der extrinsischen Information für die jeweilige Symbol-Hypothese. Der in dieser Näherungslösung noch liegende Nachteil einer Vielzahl durchzuführender Additionen, Multiplikationen und Divisionen, der einer echtzeitfähigen Implementierung bisher im Wege steht, wird durch die erfindungsgemäße Bestimmung einer logarithmierten extrinsischen Information beseitigt. Desweiteren führt die Logarithmierung der extrinsischen Information zu einer Verkleinerung der Signalaussteuerung und damit zu einer Dynamik-Reduktion. Bei einer Festkomma-Implementierung kommt es somit zu einer effizienteren Implementierung des erfindungsgemäßen Verfahrens.

Die Logarithmierung der extrinsischen Information führt zu einer Berechnungsformel für die extrinsische Information, in der logarithmierte Gewichtungsfaktoren und komplexe Koeffizienten der Tikhonov-Verteilung auftreten, die jeweils in einer in positiver Zeitrichtung verlaufenden Rekursion, im Folgenden Vorwärts-Rekursion genannt, und in einer in negativer Zeitrichtung verlaufenden Rekursion, im Folgenden Rückwärts-Rekursion genannt, bestimmt werden.

Während bei der rekursiven Berechnung des komplexen Koeffizienten der Tikhonov-Verteilung für einen bestimmten Symbol-Zeitpunkt im Fall einer Vorwärts-Rekursion das im selben Symbol-Zeitpunkt empfangene Symbol zum für den vorherigen Symbol-Zeitpunkt bestimmten komplexen Koeffizienten der Tikhonov-Verteilung vorzugsweise addiert verknüpft wird, wird im Fall einer Rückwärts-Rekursion das im selben Symbol-Zeitpunkt empfangene Symbol zum für den nachfolgenden Symbol-Zeitpunkt bestimmten komplexen Koeffizienten der Tikhonov-Verteilung vorzugsweise additiv verknüpft.

Bei der rekursiven Berechnung des logarithmierten Gewichtungsfaktors der Tikhonov-Verteilung für einen bestimmten Symbol-Zeitpunkt wird vorzugsweise im Fall einer Vorwärts-Rekursion der sogenannte Jacobi-Logarithmus aus der vorab bekannten logarithmierten a-priori-Wahrscheinlichkeit für alle zu untersuchenden Symbol-Hypothesen für denselben Symbol-Zeitpunkt und den logarithmierten Gewichtungsfaktoren der Tikhonov-Verteilung für den vorherigen Symbol-Zeitpunkt und im Fall einer Rückwärts-Rekursion der Jacobi-Logarithmus aus der vorab bekannten logarithmierten a-priori-Wahrscheinlichkeit für alle zu untersuchenden Symbol-Hypothesen für den nachfolgenden Symbol-Zeitpunkt und den logarithmierten Gewichtungsfaktoren der Tikhonov-Verteilung für den nachfolgenden Symbol-Zeitpunkt bestimmt.

In einer bevorzugten ersten Variante wird der Jacobi-Logarithmus exakt durch Addition einer Maximalwert-Funktion und einer Korrektur-Funktion berechnet und in einer zweiten Variante unter Vernachlässigung der Korrekturfunktion genähert.

Die Verbindung zwischen der Rekursion des für einen bestimmten Symbolzeitpunkt ermittelten komplexen Koeffizienten der Tikhonov-Verteilung und der Rekursion des für einen bestimmten Symbolzeitpunkt ermittelten logarithmierten Gewichtungsfaktors der Tikhonov-Verteilung erfolgt durch Addition eines für denselben Symbol-Zeitpunkt ermittelten komplexen Koeffizienten der Tikhonov-Verteilung zum Ergebnis des Jacobi-Logarithmus. Hierbei wird bei der zuvor durchgeführten Berechnung des für denselben Symbol-Zeitpunkt ermittelten komplexen Koeffizients der Tikhonov-Verteilung der komplexe Koeffizient der Tikhonov-Verteilung für den vorherigen Symbol-Zeitpunkt im Fall einer Vorwärts-Rekursion bzw. der komplexe Koeffizient der Tikhonov-Verteilung für den nachfolgendem Symbol-Zeitpunkt im Fall einer Rückwärts-Rekursion mit einem einer möglichen Symbol-Hypothese der verwendeten PSK-Modulation entsprechenden Phasenterm vorzugsweise multipliziert. Bevorzugt wird der Betrag des komplexen Koeffizienten der Tikhonov-Verteilung zum Ergebnis des Jacobi-Logarithmus addiert.

Der für die Berechnung der logarithmierten extrinsischen Information verwendete und in einer Vorwärts- bzw. einer Rückwärts-Rekursion jeweils ermittelte komplexe Koeffizient der Tikhonov-Verteilung ist vorzugsweise jeweils derjenige komplexe Koeffizient der Tikhonov-Verteilung, für dessen rekursive Berechnung der für den vorherigen Symbol-Zeitpunkt ermittelte komplexe Koeffizient der Tikhonov-Verteilung (im Fall einer Vorwärts-Rekursion) bzw. der für den nachfolgenden Symbol-Zeitpunkt ermittelte komplexe Koeffizient der Tikhonov-Verteilung (im Fall einer Rückwärts-Rekursion) jeweils mit einem Phasenterm multipliziert wird, dessen Phasenfaktor dem Phasenfaktor des jeweiligen maximalen logarithmierten Gewichtungsfaktors der Tikhonov-Verteilung für denselben Symbolzeitpunkt entspricht.

Durch die erfindungsgemäße Logarithmierung der extrinsischen Information werden in den einzelnen Rekursions-Formeln auftretende Multiplikationen durch weniger rechenaufwändige Additionen ersetzt.

Durch die bevorzugte Einführung des Jacobi-Logarithmus in den Rekursionsformeln der Gewichtungsfaktoren der Tikhonov-Verteilung und in der Berechnungsformel der extrinsische Information ist eine dabei sehr aufwändig durchzuführende logarithmierte Summation über Exponentialfunktionen vorteilhaft nicht mehr erforderlich.

Die bevorzugte Bestimmung des Phasenfaktors im zu jeder Symbol-Hypothese jeweils gehörigen Phasenterm, bei der der logarithmierte Gewichtungsfaktor der Tikhonov-Verteilung maximal wird, reduziert die in den Rekursionsformeln zur Bestimmung der komplexen Koeffizienten der Tikhonov-Verteilung auftretende Summation auf eine deutlich einfachere Berechnung eines einzigen Summanden anstelle einer aufwändigen Division.

Die Berechnung der extrinsischen Information erfolgt vorzugsweise durch Jacobi-Logarithmierung der in der Vorwärts-Rekursion und in der Rückwärts-Rekursion jeweils ermittelten logarithmierten Gewichtungsfaktoren der Tikhonov-Verteilung unter Berücksichtigung der in der Vorwärts-Rekursion und in der Rückwärts-Rekursion jeweils ermittelten komplexen Koeffizienten der Tikhonov-Verteilung.

Die erfindungsgemäße Vorrichtung und das erfindungsgemäße Verfahren zur Bestimmung einer extrinsischen Information werden im Folgenden im Detail anhand der Zeichnung erläutert. Die Figuren der Zeichnung zeigen:

Fig. 1    ein Flussdiagramm des erfindungsgemäßen Verfahrens zur Bestimmung einer extrinsischen Information und

Fig. 2    ein Blockdiagramm der erfindungsgemäßen Vorrichtung zur Bestimmung einer extrinsischen Information.

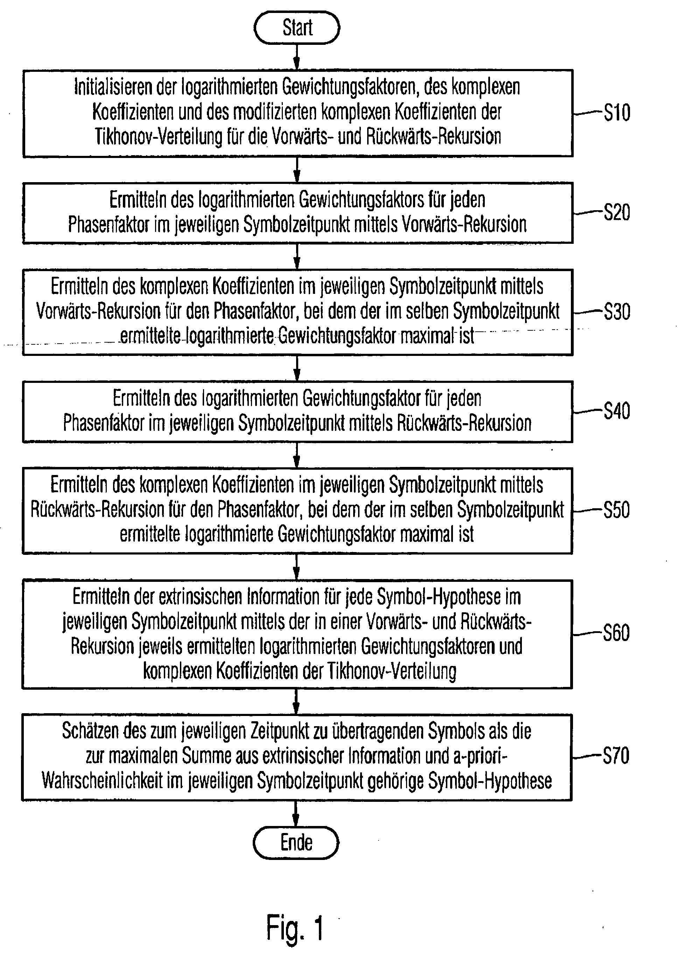

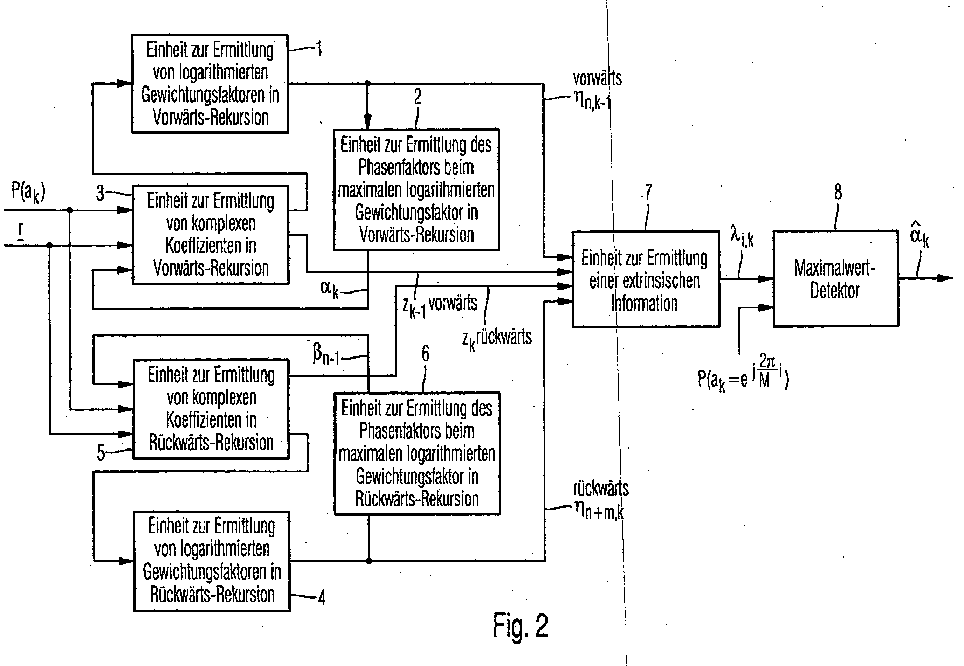

Bevor das erfindungsgemäße Verfahren zur Bestimmung einer extrinsischen Information anhand des Flussdiagramms in Fig. 1 und die erfindungsgemäße Vorrichtung zur Bestimmung einer extrinsischen Information anhand des Blockdiagramms in Fig. 2 im Detail erläutert werden, werden im Folgenden die für das Verständnis der Erfindung erforderlichen mathematischen Grundlagen hergeleitet:

Im folgenden wird ein Übertragungssystem betrachtet, in dem in einzelnen Symbol-Zeitpunkten *k=1,...,K* jeweils

zu übertragende Datensymbole $a_k$, die gemäß Gleichung (1) dem Symbolalphabet einer M-wertigen Phase-Shift-Keying(PSK)-Modulation genügen, gemäß Gleichung (2) einer differenziellen M-PSK-Modulation unterworfen. Die dabei erzeugten kodierten Symbole $c_k$ in den einzelnen Symbol-Zeitpunkten $k=1,...,K$ genügen gemäß Gleichung (3) ebenfalls dem Symbolalphabet einer M-PSK-Modulation.

$$a_k \in \left\{ e^{j\frac{2\pi}{M}m}, m = 0,...,M-1 \right\} \qquad \text{für} \quad k = 1,...,K \qquad (1)$$

$$c_k = c_{k-1} \cdot a_k \qquad (2)$$

$$c_k \in \left\{ e^{j\frac{2\pi}{M}m}, m = 0,...,M-1 \right\} \qquad \text{für} \quad k = 0,...,K \qquad (3)$$

Die mittels einer differenziellen M-PSK-Modulation erzeugten kodierten Symbole $c_k$ werden auf einem nicht frequenzselektiven Übertragungskanal mit einem annähernd konstanten Verstärkungsfaktor übertragen, der ein Phasenrauschen und ein additives Gauss'sches Rauschen aufweist.

Das Phasenrauschen wird durch eine zeitveränderliche Phase $\theta_k$ modelliert. Das Zeitverhalten der zeitveränderlichen Phase $\theta_k$ entspricht der mathematischen Beziehung in Gleichung (4). Das Phasen-Inkrement $\Delta_k$ in Gleichung (4) genügt einer reellen Gauß-Verteilung und weist einen Mittelwert von Null und eine Standardabweichung $\sigma_\Delta$ auf. Die Phase $\theta_0$ zum Symbol-Zeitpunkt Null ist über den Phasenbereich zwischen Null und $2\pi$ entsprechend einer Gleichverteilung verteilt. Während die Standardabweichung $\sigma_\Delta$ des Phasen-Inkrements $\Delta_k$ durch Messung und/oder Simulation ermittelt wird und dem Empfänger somit bekannt ist, ist die Sequenz der einzelnen Phasen-Inkremente $\Delta_k$ dem Empfänger nicht bekannt und statistisch unabhängig vom additive Gauss'schen Rauschen $v_k$ und vom kodierten Symbol $c_k$.

Das additive Gauss'sche Rauschen, das einem komplexen additiven weißen, Gauss-verteilten Rauschen (Additive-White-Gaussian-Noise (AWGN)) mit einem Mittelwert von Null und einer Varianz $N_0=2\sigma^2$ entspricht, wird durch den Rauschterm $v_k$ beschrieben. Ein eventuell vorhandener reeller Verstärkungsfaktor des Übertragungskanals wird durch Normierung der Varianz des additiven Gauss'schen Rauschens berücksichtigt.

$$\theta_{k-1} = \theta_k + \Delta_k \qquad \text{für} \quad k = 0,...,K \qquad (4)$$

Der Abtastwert des Empfangssignals $r_k$ nach der Matched-Filterung ergibt sich somit gemäß Gleichung (5).

$$r_k = c_k \cdot e^{j\theta_k} + v_k \qquad \text{für} \quad k = 0,...,K \qquad (5)$$

Im Folgenden wird das auf dem Maximum-A-Posteriori-(MAP)-Symbol-Detektionsalgorithmus basierende erfindungsgemäße Detektions-Verfahren hergeleitet. Für die Schätzung der Sequenz $\underline{a} = \left\{ a_k \right\}_{k=1}^{K}$ von voneinander unabhängigen zu übertragenden Symbolen bei unbekannter Sequenz $\underline{\theta} = \left\{ \theta_k \right\}_{k=0}^{K}$ von voneinander unabhängigen Phasenwerten des Übertragungskanals, bei unbekannter Sequenz $\underline{c} = \left\{ c_k \right\}_{k=1}^{K}$ von aufgrund der differenziellen Modulation zueinander abhängigen kodierten Symbolen und bei bekannter Sequenz $\underline{r} = \left\{ r_k \right\}_{k=0}^{K}$ von Abtastwerten des Empfangssignals ist mit einem MAP-Algorithmus die bedingte Wahrscheinlichkeitsdichte $p(\underline{a},\underline{c},\theta|\underline{r})$ für das gleichzeitige Auftreten einer bestimmten Sequenz $\underline{a}$ von zu übertragenden Symbolen, einer bestimmten Sequenz $\underline{\theta}$ von Phasenwerten des Übertragungskanals und einer bestimmten Sequenz $\underline{c}$ von kodierten Symbolen bei bekannter und damit gegebener

Sequenz $\underline{r}$ von Abtastwerten des Empfangssignals zu ermitteln.

Diese bedingte Wahrscheinlichkeitsdichte $p(\underline{a,c,\theta}|\underline{r})$ kann gemäß Gleichung (6) unter Anwendung der allgemeinen Beziehung für eine bedingte Wahrscheinlichkeit bzw. bedingte Wahrscheinlichkeitsdichte gemäß Gleichung (7) mathematisch umgeformt werden. Die dabei auftretende Wahrscheinlichkeitsdichte $p(\underline{r})$ für das Auftreten der Sequenz r von Abtastwerten des Empfangssignals ist für alle möglichen Werte der Sequenzen $\underline{a}$ und $\underline{c}$ identisch und muss somit nicht weiter berücksichtigt werden. Die Wahrscheinlichkeitsdichte $p(\underline{a,c,\theta,r})$ kann aufgrund des diskreten Werteumfangs der Sequenzen $\underline{a}$ und $\underline{c}$ gemäß Gleichung (6) in eine Wahrscheinlichkeit $P(\underline{a,c})$ und in eine bedingte Wahrscheinlichkeitsdichte $p(\underline{r,\theta}|\underline{a,c})$ zerlegt werden. Da die Sequenz $\underline{c}$ von kodierten Symbolen von der Sequenz $\underline{a}$ von zu übertragenden Symbolen abhängig ist, kann die Wahrscheinlichkeit $P(\underline{a,c})$ in die mathematische Beziehung $P(\underline{a,c})=P(\underline{a})\cdot P(\underline{c}|\underline{a})$ überführt werden. Da die Sequenz $\underline{r}$ von Abtastwerten des Empfangssignalen nicht nur eine Abhängigkeit von den Sequenzen $\underline{a}$ und $\underline{c}$, sondern auch eine Abhängigkeit von der Sequenz $\underline{\theta}$ kann die Wahrscheinlichkeitsdichte $p(\underline{r,\theta}|\underline{a,c})$ in die mathematische Beziehung $p(\underline{r,\theta}|\underline{a,c})=p(\underline{r}|\underline{\theta,a,c})\cdot p(\underline{\theta}|\underline{a,c})$ überführt werden.

Da die Sequenz $\underline{\theta}$ von Phasenwerten des Übertragungskanals unabhängig von der Sequenz $\underline{a}$ von zu übertragenden Symbolen und von der Sequenz $\underline{c}$ von kodierten Symbolen ist, ergibt sich die Wahrscheinlichkeitsdichte $p(\underline{\theta}|\underline{a,c})$ zu $p(\underline{\theta}|\underline{a,c}) = p(\underline{\theta})$. Da die Sequenz $\underline{r}$ von Abtastwerten des Empfangssignalen bei gegebener Sequenz $\underline{c}$ von kodierten Symbolen unabhängig von der Sequenz $\underline{a}$ von zu übertragenden Symbolen ist, ergibt sich die Wahrscheinlichkeitsdichte $p(\underline{r}|\underline{\theta,a,c})$ zu $p(\underline{r}|\underline{\theta,a,c}) = p(\underline{r}|\underline{\theta,c})$. Zusammengefasst kann für die Wahrscheinlichkeitsdichte $p(\underline{a,c,\theta}|\underline{r})$ eine mathematische Beziehung gemäß der zweiten Zeile in Gleichung (6) aufgestellt werden.

$$p(\underline{a},\underline{c},\underline{\theta}\,|\,\underline{r}) = \frac{p(\underline{a},\underline{c},\underline{\theta},\underline{r})}{p(\underline{r})} \propto P(\underline{a},\underline{c})\cdot p(\underline{r},\underline{\theta}\,|\,\underline{a},\underline{c}) =$$

$$= P(\underline{a})\cdot P(\underline{c}\,|\,\underline{a})\cdot p(\underline{\theta})\cdot p(\underline{r}\,|\,\underline{\theta},\underline{c}) \qquad (6)$$

$$p(x\,|\,y) = \frac{p(x,y)}{p(y)} \qquad (7)$$

Die Wahrscheinlichkeitsdichte $p(\underline{a})$ für das Auftreten der Sequenz $\underline{a}$ von zu übertragenden Symbolen ergibt sich gemäß Gleichung (8) aus dem Produkt der Wahrscheinlichkeiten für das Auftreten jedes einzelnen Symbols $a_k$, da zur mathematischen Vereinfachung eine Unabhängigkeit der einzelnen zu übertragenden Symbole zueinander angenommen wird. Diese Unabhängigkeit der einzelnen zu übertragenden Symbole ist in der Wirklichkeit nicht immer gegeben.

$$p(\underline{a}) = \prod_{k=1}^{K} p(a_k) \qquad (8)$$

Die Wahrscheinlichkeitsdichte $p(\underline{\theta})$ für das Auftreten der Sequenz $\underline{\theta}$ von Phasenwerten des Übertragungskanals lässt sich gemäß Gleichung (9) aufgrund der Abhängigkeit der einzelnen Phasenwerte zueinander aus dem Produkt der Wahrscheinlichkeitsdichte $p(\theta_0)$ für das Auftreten des Phasenwerts $\theta_0$ zum Symbolzeitpunkt Null und den Wahrscheinlichkeitsdichten $p(\theta_k|\theta_{k-1})$ für das Auftreten des Phasenwerts $\theta_k$ zum Symbolzeitpunkt $k$ unter der Voraussetzung, dass für den vorherigen Symbolzeitpunkt $k$-1 der Phasenwert $\theta_{k-1}$ bekannt ist, ermitteln.

$$p(\underline{\theta}) = p(\theta_0)\cdot \prod_{k=1}^{K} p(\theta_k\,|\,\theta_{k-1}) \qquad (9)$$

Die Wahrscheinlichkeitsdichte $p(\underline{c}|\underline{a})$ für das Auftreten der Sequenz $\underline{c}$ von kodierten Symbolen unter der Voraussetzung, dass gleichzeitig die Sequenz $\underline{a}$ von zu übertragenden Symbolen bekannt ist, ergibt sich gemäß Gleichung (10) aus dem Produkt der Wahrscheinlichkeitsdichte $p(c_0)$ für das Auftreten des kodierten Symbols $c_0$ zum Symbolzeitpunkt Null und der zu jedem kodierten Symbol $c_k$ jeweils gehörigen Indikatorfunktion $I(c_k,c_{k-1},a_k)$, die bei Vorliegen der Kodierungs-Bedingung gemäß Gleichung (2) den Wert Eins und andernfalls den Wert Null aufweist.

$$p(\underline{c}\,|\,\underline{a}) = p(c_0) \cdot \prod_{k=1}^{K} I(c_k, c_{k-1}, a_k) \qquad (10)$$

Die Wahrscheinlichkeitsdichte $p(\underline{r}|\underline{c},\underline{\theta})$ für das Auftreten der Sequenz $\underline{r}$ von Abtastwerten des Empfangssignals unter der Voraussetzung, dass gleichzeitig die Sequenz $\underline{c}$ von kodierten Symbolen und die Sequenz $\underline{\theta}$ von Phasenwerten des Übertragungskanals bekannt sind, können gemäß Gleichung (11) durch das Produkt der Wahrscheinlichkeitsdichten $p(r_k|c_k,\theta_k)$ für das Auftreten jedes einzelnen Abtastwerts des Empfangssignals $r_k$ in den einzelnen Symbolzeitpunkten $k$ unter der Voraussetzung, dass gleichzeitig das kodierte Symbol $c_k$ und der Phasenwert $\theta_k$ des Übertragungskanals in den einzelnen Symbolzeitpunkten $k$ bekannt sind, dargestellt werden. Die Wahrscheinlichkeitsdichte $p(r_k|c_k,\theta_k)$ für das Auftreten jedes einzelnen Abtastwerts des Empfangssignals $r_k$ in den einzelnen Symbolzeitpunkten $k$ unter der Voraussetzung, dass gleichzeitig das kodierte Symbol $c_k$ und der Phasenwert $\theta_k$ des Übertragungskanals in den einzelnen Symbolzeitpunkten $k$ bekannt sind, wird im MAP-Algorithmus gemäß Gleichung (12) als Gauß-Verteilung des Abtastwerts des Empfangssignals $r_k$ zum Symbolzeitpunkt $k$ mit dem Produkt aus dem kodierten Symbol $c_k$ zum Symbolzeitpunkt $k$ und dem Phasenterm mit dem bekannten Phasenwert $\theta_k$ zum Symbolzeitpunkt $k$ als Mittelwert gegeben.

$$p(\underline{r}\,|\,\underline{c},\underline{\theta}) = \prod_{k=0}^{K} p(r_k\,|\,c_k,\theta_k) \qquad (11)$$

$$p(r_k\,|\,c_k,\theta_k) = \frac{1}{2\pi\sigma^2}\exp\left(-\frac{\left|r_k - c_k \cdot e^{j\theta_k}\right|^2}{2\sigma^2}\right) \qquad (12)$$

Unter Berücksichtigung der Gleichungen (8), (9), (10) und (11) ergibt sich ausgehend von Gleichung (6) eine Beziehung für die bedingte Wahrscheinlichkeitsdichte $p(\underline{a},\underline{c},\underline{\theta}|\underline{r})$ gemäß Gleichung (13).

$$p(\underline{a},\underline{c},\underline{\theta}\,|\,\underline{r}) = \prod_{k=1}^{K} p(a_k) \cdot p(c_0)\prod_{k=1}^{K} I(c_k, c_{k-1}, a_k) \cdot p(\theta_0) \cdot \prod_{k=1}^{K} p(\theta_k\,|\,\theta_{k-1}) \cdot \prod_{k=1}^{K} p(r_k\,|\,c_k,\theta_k)$$

$$(13)$$

Diese Gleichung (13) beschreibt die Wahrscheinlichkeitsdichte für das Auftreten mehrerer unbekannter Sequenzen, nämlich der Sequenz $\underline{a}$ von zu übertragenden Symbolen, der Sequenz $\underline{c}$ von kodierten Symbol und der Sequenz $\underline{\theta}$ von Phasenwerten des Übertragungskanals, unter der Bedingung einer bekannten Sequenz $\underline{r}$ von Abtastwerten des Empfangssignals. Eine Umsetzung dieser mathematischen Formel für die Wahrscheinlichkeitsdichte im Hinblick auf eine Ermittlung des im jeweiligen Symbolzeitpunkt $k$ jeweils übertragenen Symbols $a_k = e^{j\frac{2\pi}{M}m}$ ist in dieser Form aufgrund der Vielzahl von multiplikativ miteinander verknüpften Wahrscheinlichkeitsdichten, die für jede Sequenz $\underline{a}$ von zu übertragenden Symbolen, für jede Sequenz $\underline{c}$ von kodierten Symbolen und für jede Sequenz $\underline{\theta}$ von Phasenwerten des Übertragungskanals jeweils zu berechnen sind, technisch zu aufwändig.

Eine Lösung dieses Problems ist in der Trennung des gesamten Übertragungsvorganges in insgesamt drei Zeitabschnitte zu sehen, nämlich einen Zeitabschnitt vom Symbolzeitpunkt Null (dem Beginn der einzelnen Sequenzen) bis zum Symbolzeitpunkt $k$-1, einen Zeitabschnitt vom Symbolzeitpunkt $k$-1 bis zum Symbolzeitpunkt $k$ und einen Zeitabschnitt vom Symbolzeitpunkt $k$ bis zum Symbolzeitpunkt $K$ (dem Ende der einzelnen Sequenzen).

Im Zeitabschnitt vom Symbolzeitpunkt $k$-1 bis zum Symbolzeitpunkt $k$ wirkt das im Symbolzeitpunkt $k$ zu übertragenden Symbolen $a_k$ gemäß Gleichung (2) über das kodierte Symbol $c_{k-1}$ zum Symbolzeitpuhkt $k$-1 direkt auf das kodierte Symbol $c_k$ zum Symbolzeitpunkt $k$ ein. Außerdem hat gemäß Gleichung (5) das kodierte Symbol $c_{k-1}$ zum Symbolzeitpunkt $k$-1 und der Phasenwert $\theta_{k-1}$ des Übertragungskanals zum Symbolzeitpunkt $k$-1 eine direkte Auswirkung auf den Abtastwert des Empfangssignals $r_{k-1}$ zum Symbolzeitpunkt $k$-1 bzw. hat das kodierte Symbol $c_k$ zum Symbolzeitpunkt $k$ und der Phasenwert $\theta_k$ des Übertragungskanals zum Symbolzeitpunkt $k$ eine direkte Auswirkung auf den Abtastwert des Empfangssignals $r_k$ zum Symbolzeitpunkt $k$. Schließlich wirkt der Phasenwert $\theta_{k-1}$ des Übertragungskanals im Symbolzeitpunkt $k$-1 gemäß Gleichung (4) direkt auf den Phasenwert $\theta_k$ des Übertragungskanals im Symbolzeitpunkt $k$.

Eine Kenngröße, die die Wahrscheinlichkeit für das Auftreten des zu übertragenden Symbols $a_k = e^{j\frac{2\pi}{M}i}$ zum Symbolzeitpunkt **k** charakterisiert, ist die extrinsische Information $\varepsilon_{i,k}$ für das zu übertragende Symbol $\alpha_k$ zum Symbolzeitpunkt **k**, die als Verhältnis der a-posteriori-Wahrscheinlichkeit **P(a_k|r)** des zu übertragenden Symbols **a_k** zum Symbolzeitpunkt **k** bei bekannter Sequenz _r_ von Empfangssymbolen und der a-priori-Wahrscheinlichkeit $P(a_k)$ des zu übertragenden Symbols **a_k** zum Symbolzeitpunkt **k** definiert ist.

Für die Bestimmung der extrinsischen Information $\varepsilon_{i,k} = \dfrac{P(a_k = e^{j\frac{2\pi}{M}i} \mid \underline{r})}{P(a_k = e^{j\frac{2\pi}{M}i})}$ für das zu übertragende Symbol

**a_k** zum Symbolzeitpunkt **k** werden für alle Hypothesen des kodierten Symbols **c_{k-1}** und des Phasenwerts $\theta_{k-1}$ des Übertragungskanals im Symbolzeitpunkt **k-1,** bei bekannter Sequenz $r_0^{k-1}$ von Abtastwerten des Empfangssignals vom Symbolzeitpunkt Null bis zum Symbolzeitpunkt **k-1** und bei bekannter Sequenz $r_k^K$ von Abtastwerten des Empfangssignals vom Symbolzeitpunkt **k** bis zum Symbolzeitpunkt **K** die zugehörigen Wahrscheinlichkeiten der oben genannten Zusammenhänge summiert.

Hierzu werden gemäß Gleichung (14) die Wahrscheinlichkeitsdichten $p(c_{k-1}, \theta_{k-1} \mid r_0^{k-1})$ für das Auftreten des kodierten Symbols **c_{k-1}** und des Phasenwerts $\theta_{k-1}$ des Übertragungskanals zum Symbolzeitpunkt **k-1** bei bekannter Sequenz $r_0^{k-1}$ von Abtastwerten des Empfangssignals vom Symbolzeitpunkt Null bis zum Symbolzeitpunkt **k-1,** die Wahrscheinlichkeitsdichten $p(c_k = c_{k-1} \cdot a_k, \theta_k \mid r_k^K)$ für das Auftreten des kodierten Symbols $c_k$ und des Phasenwerts $\theta_k$ des Übertragungskanals zum Symbolzeitpunkt **K** bei bekannter Sequenz $r_k^K$ von Abtastwerten des Empfangssignals vom Symbolzeitpunkt **k** bis zum Symbolzeitpunkt K und die Wahrscheinlichkeitsdichten $p(\theta_k|\theta_{k-1})$ für den Phasenwert $\theta_k$ des Übertragungskanals zum Symbolzeitpunkt **k** bei bekanntem Phasenwert $\theta_{k-1}$ des Übertragungskanals zum Symbolzeitpunkt **k-1** miteinander multipliziert und für alle Hypothesen des kodierten Symbols **c_{k-1}** zum Symbolzeitpunkt **k-1** summiert und über alle Hypothesen des Phasenwerts $\theta_{k-1}$ des Übertragungskanals zum Symbolzeitpunkt **k-1** und des Phasenwerts $\theta_k$ des Übertragungskanals zum Symbolzeitpunkt **k** integriert.

$$\varepsilon_{i,k} = \frac{P(a_k = e^{j\frac{2\pi}{M}i} \mid \underline{r})}{P(a_k = e^{j\frac{2\pi}{M}i})} \propto \sum_{c_{k-1}} \iint p(c_{k-1}, \theta_{k-1} \mid r_0^{k-1}) \cdot p(c_k = c_{k-1} \cdot a_k, \theta_k \mid r_k^K) \cdot$$

$$\cdot p(\theta_k \mid \theta_{k-1}) d\theta_k d\theta_{k-1} \qquad\qquad (14)$$

Die Wahrscheinlichkeitsdichte $p(c_{k-1}, \theta_{k-1} \mid r_0^{k-1})$ für das Auftreten des kodierten Symbols **c_{k-1}** und des Phasenwerts $\theta_{k-1}$ des Übertragungskanals zum Symbolzeitpunkt **k-1** bei bekannter Sequenz $r_0^{k-1}$ von Abtastwerten des Empfangssignals vom Symbolzeitpunkt 0 bis zum Symbolzeitpunkt **k-1** kann für den Zeitabschnitt vom Symbolzeitpunkt Null bis zum Symbolzeitpunkt **k-1** im Rahmen einer Vorwärts-Rekursion bestimmt werden.

Zur Ermittlung einer Rekursionsformel für eine derartige Vorwärts-Rekursion im Rekursionsschritt zwischen den Symbolzeiten **k-1** und **k** werden die Wahrscheinlichkeiten bzw. Wahrscheinlichkeitsdichten sämtlicher Zusammenhänge gemäß Gleichung (2), (4) und (5), die in den Symbolzeiten **k-1** und **k** und zwischen den Symbolzeiten **k-1** und **k** vorliegen, ermittelt:

- die Wahrscheinlichkeitsdichten $p(c_k, \theta_k \mid r_0^k)$ für das Auftreten des kodierten Symbols **c_k** und des Phasenwerts $\theta_k$ des Übertragungskanals zum Symbolzeitpunkt **k** bei bekannter Sequenz $r_0^k$ von Abtastwerten des Empfangssignals vom Symbolzeitpunkt Null bis zum Symbolzeitpunkt *k*,

- die Wahrscheinlichkeitsdichte $p(c_{k-1}, \theta_{k-1} | r_0^{k-1})$ für das Auftreten des kodierten Symbols $c_{k-1}$ und des Phasenwerts $\theta_{k-1}$ des Übertragungskanals zum Symbolzeitpunkt *k-1* bei bekannter Sequenz $r_0^{k-1}$ von Abtastwerten des Empfangssignals vom Symbolzeitpunkt Null bis zum Symbolzeitpunkt *k-1*,
- die Wahrscheinlichkeitsdichte $p(r_k | c_k, \theta_k)$ für das Auftreten des Abtastwerts des Empfangssignals $r_k$ zum Symbolzeitpunkt *k* bei bekannten kodierten Symbol $c_k$ und bekannten Phasenwert $\theta_k$ des Übertragungskanals zum Symbolzeitpunkt *k*,
- die a-priori-Wahrscheinlichkeit $P(a_k)$ für das zu übertragende Symbol $a_k$ zum Symbolzeitpunkt *k* und
- die Wahrscheinlichkeitsdichte $p(\theta_k | \theta_{k-1})$ für den Phasenwert $\theta_k$ des Übertragungskanals zum Symbolzeitpunkt *k* bei bekannten Phasenwert $\theta_{k-1}$ des Übertragungskanals zum Symbolzeitpunkt *k-1*.

Die Wahrscheinlichkeitsdichte $p(c_k, \theta_k | r_0^k)$ für das Auftreten des kodierten Symbols $c_k$ und des Phasenwerts $\theta_k$ des Übertragungskanals zum Symbolzeitpunkt *k* bei bekannter Sequenz $r_0^k$ von Abtastwerten des Empfangssignals vom Symbolzeitpunkt Null bis zum Symbolzeitpunkt *k* ergibt sich gemäß Gleichung (15) im Rahmen einer
Vorwärts-Rekursion ausgehend von der Wahrscheinlichkeitsdichte $p(c_{k-1}, \theta_{k-1} | r_0^{k-1})$ für das Auftreten des kodierten
Symbols $c_{k-1}$ und des Phasenwerts $\theta_{k-1}$ des Übertragungskanals zum Symbolzeitpunkt *k-1* bei bekannter Sequenz $r_0^k$
von Abtastwerten des Empfangssignals vom Symbolzeitpunkt Null bis zum Symbolzeitpunkt *k* mittels Multiplikation mit
den übrigen ermittelten Wahrscheinlichkeiten und anschließender Summation über alle Hypothesen für das zu übertragende Symbol $a_k$ im Symbolzeitpunkt *k* und Integration über alle Hypothesen des Phasenwerts $\theta_{k-1}$ des Übertragungskanals zum Symbolzeitpunkt *k-1*.

$$p(c_k, \theta_k | r_0^k) = p(r_k | c_k, \theta_k) \cdot \sum_{i=0}^{M-1} P(a_k = e^{j\frac{2\pi}{M}i}) \cdot \int p(c_{k-1} = c_k \cdot a_k^*, \theta_{k-1} | r_0^{k-1}) \cdot p(\theta_k | \theta_{k-1}) d\theta_{k-1}$$

$$(15)$$

Die Wahrscheinlichkeitsdichte $p(c_k, \theta_k | r_k^K)$ für das Auftreten des kodierten Symbols $c_k$ und des Phasenwerts $\theta_k$ des Übertragungskanals zum Symbolzeitpunkt *k* bei bekannter Sequenz $r_k^K$ von Abtastwerten des Empfangssignals vom Symbolzeitpunkt *k* bis zum Symbolzeitpunkt *K* kann für den Zeitabschnitt vom Symbolzeitpunkt *k* bis zum
Symbolzeitpunkt *K* in Rahmen einer Rückwärts-Rekursion bestimmt werden.
Zur Ermittlung einer Rekursionsformel für eine derartige Rückwärts-Rekursion im Rekursionsschritt zwischen
den Symbolzeiten *k-1* und *k* werden die Wahrscheinlichkeiten bzw. Wahrscheinlichkeitsdichten sämtlicher Zusammenhänge gemäß Gleichung (2), (4) und (5), die in den Symbolzeiten *k-1* und *k* und zwischen den Symbolzeiten *k-1* und *k*
vorliegen, ermittelt:

- die Wahrscheinlichkeitsdichte $p(c_{k-1}, \theta_{k-1} | r_{k-1}^K)$ für das Auftreten des kodierten Symbols $c_{k-1}$ und des Phasenwerts $\theta_{k-1}$ des Übertragungskanals zum Symbolzeitpunkt *k-1* bei bekannter Sequenz $r_{k-1}^K$ von Abtastwerten des Empfangssignals vom Symbolzeitpunkt *k*-1 bis zum Symbolzeitpunkt *K,*
- die Wahrscheinlichkeitsdichte $p(c_k, \theta_k | r_k^K)$ für das Auftreten des kodierten Symbols $c_k$ und des Phasenwerts
$\theta_k$ des Übertragungskanals zum Symbolzeitpunkt *k* bei bekannter Sequenz $r_k^K$ von Abtastwerten des Empfangssignals vom Symbolzeitpunkt *k* bis zum Symbolzeitpunkt *K,*
- die Wahrscheinlichkeitsdichte $p(r_{k-1} | c_{k-1}, \theta_{k-1})$ für das Auftreten des Abtastwerts des Emp.fangssignals $r_{k-1}$ zum Symbolzeitpunkt *k=1* bei bekanntem kodierten Symbol $c_{k-1}$ und bekannten Phasenwert $\theta_{k-1}$ des Übertragungskanals zum Symbolzeitpunkt **k-1,**

- die a-priori-Wahrscheinlichkeit $P(a_k)$ für das zu übertragende Symbol $a_k$ zum Symbolzeitpunkt **k** und
- die Wahrscheinlichkeitsdichte $p(\theta_k|\theta_{k-1})$ für den Phasenwert $\theta_k$ des Übertragungskanals zum Symbolzeitpunkt **k** bei bekanntem Phasenwert $\theta_{k-1}$ des Übertragungskanals zum Symbolzeitpunkt **k-1.**

Die Wahrscheinlichkeitsdichte $p(c_{k-1},\theta_{k-1}\,|\,r_{k-1}^{K})$ für das Auftreten des kodierten Symbols $c_{k-1}$ und des Phasenwerts $\theta_{k-1}$ des Übertragungskanals zum Symbolzeitpunkt **k-1** bei bekannter Sequenz $r_{k-1}^{K}$ von Abtastwerten des Empfangssignals vom Symbolzeitpunkt **k-1** bis zum Symbolzeitpunkt **K** ergibt sich gemäß Gleichung (16) im Rahmen einer Rückwärts-Rekursion ausgehend von der Wahrscheinlichkeitsdichte $p(c_k,\theta_k\,|\,r_k^{K})$ für das Auftreten des kodierten Symbols $c_k$ und des Phasenwerts $\theta_k$ des Übertragungskanals zum Symbolzeitpunkt **k** bei bekannter Sequenz $r_k^{K}$ von Abtastwerten des Empfangssignals vom Symbolzeitpunkt **k** bis zum Symbolzeitpunkt mittels Multiplikation mit den übrigen ermittelten Wahrscheinlichkeiten bzw. Wahrscheinlichkeitsdichten und anschließender Summation über alle Hypothesen des zu übertragenden Symbols $a_k$ im Symbolzeitpunkt **k** und Integration über alle Hypothesen des Phasenwerts $\theta_k$ des Übertragungskanals zum Symbolzeitpunkt **k**.

$$p(c_{k-1},\theta_{k-1}\,|\,r_{k-1}^{K}) = p(r_{k-1}\,|\,c_{k-1},\theta_{k-1})\cdot\sum_{i=0}^{M-1}P(a_k = e^{j\frac{2\pi}{M}i})\cdot\int p(c_k = c_{k-1}\cdot a_k,\theta_k\,|\,r_k^{K})\cdot p(\theta_k\,|\,\theta_{k-1})d\theta_k$$

$$(16)$$

Die Wahrscheinlichkeitsdichte $p(c_{k-1},\theta_{k-1}\,|\,r_0^{k-1})$ für das Auftreten des kodierten Symbols $c_{k-1}$ und des Phasenwerts $\theta_{k-1}$ des Übertragungskanals zum Symbolzeitpunkt **k-1** bei bekannter Sequenz $r_0^{k-1}$ von Abtastwerten des Empfangssignals vom Symbolzeitpunkt 0 bis zum Symbolzeitpunkt **k-1** kann gemäß Gleichung (17) unter Berücksichtigung der Zwischengrößen $x=\theta_k$ und $y = c_k + r_0^k$ umgeformt werden.

$$p(c_k,\theta_k\,|\,r_0^k) = p(\theta_k\,|\,c_k,r_0^k)\cdot p(c_k\,|\,r_0^k) \qquad (17)$$

In Anlehnung an das obige zitierte Dokument gelten zusätzlich folgende Eigenschaften:

I.

$$\mathrm{I.}\qquad p(c_k\,|\,r_0^k) = const.\ \ \mathrm{und}\ \ p(c_k\,|\,r_k^{K}) = const. \qquad (18)$$

II.

$$\mathrm{II.}\qquad p(\theta_k\,|\,c_k = e^{j\frac{2\pi}{M}i},r_0^k) = p(\theta_k + \frac{2\pi}{M}i\,|\,c_k = e^{j0},r_0^k) \qquad (19)$$

III. Die Summation über alle Hypothesen des kodierten Symbols $c_{k-1}$ zum Symbolzeitpunkt **k -1** in Gleichung (14) verschwinden, da alle M Summanden identisch sind.

Insbesondere aus Eigenschaft I. und II. gilt, dass im Rahmen der Vorwärts-Rekursion nur noch die Wahrschein-

lichkeitsdichte $\psi_k(\theta_k) = p(\theta_k \mid c_k = 1, r_0^k)$ und im Rahmen der Rückwärts-Rekursion nur noch die Wahrscheinlichkeitsdichte $\omega_k(\theta_k) = p(\theta_k \mid c_k = 1, r_k^K)$ zu berechnen sind. Somit ergibt sich ausgehend vom Gleichung (15), (17) und (19) die vereinfachte Berechnungsformel für die Wahrscheinlichkeitsdichte $\psi_k(\theta_k)$ im Symbolzeitpunkt **k** in der Vorwärts-Rekursion gemäß Gleichung (20) und ausgehend vom Gleichung (16) und (17) die vereinfachte Berechnungsformel für die Wahrscheinlichkeitsdichte $\psi_{k-1}(\theta_k)$ im vorherigen Symbolzeitpunkt **k-1** in der Rückwärts-Rekursion gemäß Gleichung (21).

$$\psi_k(\theta_k) = p(r_k \mid c_k = 1, \theta_k) \cdot \sum_{i=0}^{M-1} P(a_k = e^{j\frac{2\pi}{M}i}) \int \psi_{k-1}(\theta_{k-1} - \frac{2\pi}{M}i) \cdot p(\theta_k \mid \theta_{k-1}) d\theta_{k-1} \quad (20)$$

$$\omega_{k-1}(\theta_{k-1}) = p(r_{k-1} \mid c_{k-1} = 1, \theta_{k-1}) \cdot \sum_{i=0}^{M-1} p(a_k = e^{j\frac{2\pi}{M}i}) \int \omega_k(\theta_k + \frac{2\pi}{M}i) \cdot p(\theta_k \mid \theta_{k-1}) d\theta_k \quad (21)$$

Für die extrinsische Information ergibt sich ausgehend von Gleichung (14) unter Berücksichtigung der Eigenschaft III. und Gleichung (19) die Beziehung gemäß Gleichung (22).

$$\varepsilon_{i,k} = \frac{P(a_k = e^{j\frac{2\pi}{M}i} \mid \underline{r})}{P(a_k = e^{j\frac{2\pi}{M}i})} = \iint \psi_{k-1}(\theta_{k-1}) \cdot \omega_k(\theta_k + \frac{2\pi}{M}i) \cdot p(\theta_k \mid \theta_{k-1}) d\theta_k d\theta_{k-1}$$

$$(22)$$

Diese in den Gleichungen (20), (21) und (22) dargestellte vereinfachte Vorwärts-Rückwärts-Rekursion inklusive Berechnung der extrinsischen Information enthält die kontinuierlichen Wahrscheinlichkeitsdichtefunktionen

$\psi_k(\theta_k) = p(\theta_k \mid c_k = 1, r_0^k)$ , $\omega_k(\theta_k) = p(\theta_k \mid c_k = 1, r_k^K)$ , $p(r_k \mid c_k = 1, \theta_k)$, $P(r_{k-1} \mid c_{k-1} = 1, \theta_{k-1})$ und $p(\theta_k \mid \theta_{k-1})$

sowie Integrationen über diese kontinuierlichen Wahrscheinlichkeitsdichtefunktionen, die eine direkte Umsetzung in eine auf einem Rechner ablauffähige Implementierung erschweren.

Eine Vereinfachung dieser Problematik ergibt sich, indem die Wahrscheinlichkeitsdichtefunktionen

$\psi_k(\theta_k) = p(\theta_k \mid c_k = 1, r_0^k)$ und $\omega_k(\theta_k) = p(\theta_k \mid c_k = 1, r_k^K)$ gemäß Gleichung (23) und (24) als Summen von jeweils **M** mit einem reellen Gewichtungsfaktor $q_{m,k}^{vorwärts}$ bzw. $q_{m,k}^{rückwärts}$ gewichteten Tikhonov-Verteilungen **t(.)** genähert werden. Der Faktor **M** entspricht der Wertigkeit des Symbolalphabets der verwendeten PSK-Modulation.

$$\psi_k(\theta_k) = \sum_{m=0}^{M-1} q_{m,k}^{vorwärts} \cdot t(z_k^{vorwärts} \cdot e^{j\frac{2\pi}{M}m}; \theta_k) \quad (23)$$

$$\omega_k(\theta_k) = \sum_{m=0}^{M-1} q_{m,k}^{rückwärts} \cdot t(z_k^{rückwärts} \cdot e^{j\frac{2\pi}{M}m}; \theta_k) \quad (24)$$

Die jeweilige Tikhonov-Verteilung ist von einem komplexen Faktor $z_k^{vorwärts}$ bzw. $z_k^{rückwärts}$ und vom Phasenwert $\theta_k$ zum Symbolzeitpunkt **k** abhängig und ergibt sich aus Gleichung (25). Sie enthält die modifizierte Bessel-Funktion $I_0$ erster Ordnung.

$$t(z; \theta) = \frac{e^{\text{Re}\{z \cdot e^{-j\theta}\}}}{2\pi I_0(|z|)} \qquad (25)$$

Für die Wahrscheinlichkeitsdichte $\psi_k(\theta_k)$ in der Vorwärts-Rekursion ergibt sich ausgehend von Gleichung (20) unter Berücksichtigung einer Tikhonov-Verteilung für die Wahrscheinlichkeitsdichte $\psi_k(\theta_k)$ gemäß Gleichung (23) eine Beziehung gemäß Gleichung (26). Hierbei wird für die Wahrscheinlichkeitsdichte $p(r_k|c_k, \theta_k)$ für den Abtastwert des Empfangssignals $r_k$ zum Symbolzeitpunkt $k$ bei bekannten kodierten Symbol $c_k$ und bekannten Phasenwert $\theta_k$ des Übertragungskanals im Symbolzeitpunkt $k$ in der Vorwärts-Rekursion in Gleichung (20) eine Gauss-Verteilung gemäß Gleichung (12) verwendet und dabei werden alle Exponentialfunktions-Terme vernachlässigt, die keine Abhängigkeit vom Phasenwert $\theta_k$ aufweisen und somit im Hinblick auf die Wahrscheinlichkeitsdichte $\psi_k(\theta_k)$ konstante Terme darstellen. Für die Wahrscheinlichkeitsdichte $p(\theta_k|\theta_{k-1})$ für den Phasenwert $\theta_k$ des Übertragungskanals im Symbolzeitpunkt $k$ bei bekannten Phasenwert $\theta_{k-1}$ des Übertragungskanals zum Symbolzeitpunkt $k$-1 wird eine Gauss-Verteilung mit Mittelwert $\theta_{k-1}$ und Varianz $\sigma_\Delta^2$ angenommen, da der Verlauf der einzelnen Phasen-Inkremente $\Delta_k$ in Gleichung (4) Gauss-verteilt mit Mittelwert Null und Varianz $\sigma_\Delta^2$ ist. Zusätzlich werden alle multiplikativen Faktoren, die keine Abhängigkeit vom Phasenwert $\theta_k$ aufweisen, vernachlässigt.

$$\psi_k(\theta_k) = e^{\frac{1}{\sigma^2} \cdot \text{Re}\{r_k \cdot e^{-j\theta_k}\}} \cdot \sum_{i=0}^{M-1} p(a_k = e^{j\frac{2\pi}{M}i}) \int \sum_{m=0}^{M-1} q_{m,k-1}^{\text{vorwärts}} \cdot$$

$$t(z_{k-1}^{\text{vorwärts}} \cdot e^{j\frac{2\pi}{M}m}; \theta_{k-1} - \frac{2\pi}{M}i) \cdot g(\theta_{k-1}, \sigma_\Delta^2; \theta_k) d\theta_k \qquad (26)$$

Für die Faltung der Tikhonov-Verteilung $t(.)$ mit der Gaus-Verteilung in Gleichung (26) kann die Näherung (27) verwendet werden. Mit Einführung dieser Näherung geht die mathematische Beziehung für die Wahrscheinlichkeitsdichte $\psi_k(\theta_k)$ in der Vorwärts-Rekursion gemäß Gleichung (26) unter Einführung des modifizierten komplexen Koeffizienten $z'_{m,k}{}^{\text{vorwärts}}$ der Tikhonov-Verteilung $t(.)$ gemäß Gleichung (28) in Gleichung (29) über.

$$\int t(z; \theta) \cdot g(\overline{\theta}, \sigma_\Delta^2; \theta) d\theta \approx t(\frac{z}{1 + \sigma_\Delta^2 \cdot |z|}; \theta) \qquad (27)$$

$$z'_{k-1}{}^{\text{vorwärts}} = \frac{z_{k-1}{}^{\text{vorwärts}}}{1 + \sigma_\Delta^2 \cdot |z_{k-1}{}^{\text{vorwärts}}|} \qquad (28)$$

$$\psi_k(\theta_k) = e^{\frac{1}{\sigma^2} \cdot \text{Re}\{r_k \cdot e^{-j\theta_k}\}} \cdot \sum_{i=0}^{M-1}\sum_{m=0}^{M-1} P(a_k = e^{j\frac{2\pi}{M}i}) q_{m,k-1}{}^{\text{vorwärts}} \, t(z'_{k-1}{}^{\text{vorwärts}}; \theta_k - \frac{2\pi}{M}(m+i))$$

$$(29)$$

Die in der Tikhonov-Verteilung $t(.)$ verwendete Bessel-Funktion $I_0(.)$ kann für große Argumente durch eine Exponentialfunktion genähert werden. Aus Gleichung (25) folgt somit die mathematische Beziehung in Gleichung (30).

$$e^{\text{Re}\{z \cdot e^{-j\theta}\}} \approx 2\pi \cdot e^{|z|} \cdot t(z; \theta) \qquad (30)$$

Durch Anwendung der mathematische Beziehung in Gleichung (30) und durch Substitution der Laufindizes $i$ und $m$ durch den neuen Laufindex $n = i+m$ geht die mathematische Beziehung für die Wahrscheinlichkeitsdichte $\psi_k(\theta_k)$ in der Vorwärts-Rekursion in Gleichung (29) über in die mathematische Beziehung in Gleichung (31).

$$\psi_k\left(\theta_k\right) = e^{\frac{1}{\sigma^2}\cdot Re\left\{r_k\cdot e^{-j\theta_k}\right\}}\cdot \sum_{n=0}^{M-1}\sum_{i=0}^{M-1}P(a_k = e^{j\frac{2\pi}{M}i})\cdot q_{(n-i)ModM,k-1}^{\phantom{(n-i)ModM,k-1}vorw\ddot{a}rts}\cdot e^{\left|z'_{k-1}^{\phantom{k-1}vorw\ddot{a}rts}\cdot e^{j\frac{2\pi}{M}n}+\frac{r_k}{\sigma^2}\right|}\cdot$$

$$\cdot t(z'_{k-1}^{\phantom{k-1}vorw\ddot{a}rts}\cdot e^{j\frac{2\pi}{M}n}+\frac{r_k}{\sigma^2};\theta_k) \tag{31}$$

Ein Vergleich der mathematischen Beziehung für die Wahrscheinlichkeitsdichte $\psi_k(\theta_k)$ in Gleichung (31) und in Gleichung (23) ergibt eine mathematische Rekursionsformel für die Berechnung des reellen Gewichtungsfaktors $q_{m,k}^{vorw\ddot{a}rts}$ der Tikhonov-Verteilung $t(.)$ gemäß Gleichung (32) und für die Berechnung des komplexen Koeffizienten $z_k^{vorw\ddot{a}rts}$ der Tikhonov-Verteilung $t(.)$ gemäß Gleichung (33). Dabei wurde der Laufindex $n$ durch den Laufindex $m$ ersetzt. Für die Ermittlung der mathematischen Beziehung in Gleichung (33) wurde die Näherung in Gleichung (34) berücksichtigt.

$$q_{m,k}^{\phantom{m,k}vorw\ddot{a}rts} = \sum_{i=0}^{M-1}P(a_k = e^{j\frac{2\pi}{M}i})\cdot \tilde{q}_{(m-i)ModM,k-1}^{\phantom{(m-i)ModM,k-1}vorw\ddot{a}rts}\cdot e^{\left|z'_{k-1}^{\phantom{k-1}vorw\ddot{a}rts}\cdot e^{j\frac{2\pi}{M}m}+\frac{r_k}{\sigma^2}\right|}$$

$$\text{für } m = 0,..,M-1 \tag{32}$$

$$z_k^{\phantom{k}vorw\ddot{a}rts} = z'_{k-1}^{\phantom{k-1}vorw\ddot{a}rts} + \frac{r_k}{\sigma^2}\sum_{m=0}^{M-1}\tilde{q}_{m,k}^{\phantom{m,k}vorw\ddot{a}rts}\cdot e^{j\frac{2\pi}{M}m} \tag{33}$$

$$\sum_m q_m\cdot t(z\cdot e^{j\frac{2\pi}{M}m}+\frac{r_k}{\sigma^2};\theta) \approx \sum_m q_m\cdot t(w\cdot e^{j\frac{2\pi}{M}m};\theta) \text{ mit}$$

$$w = z + \sum_m \frac{r_k}{\sigma^2}\cdot q_m\cdot e^{-j\frac{2\pi}{M}m} \tag{34}$$

Vor Durchführung der Vorwärts-Rekursion zur Bestimmung des komplexen Koeffizienten $z_k^{vorw\ddot{a}rts}$ der Tikhonov-Verteilung $t(.)$ sind die reellen Gewichtungsfaktoren $q_{m,k}^{vorw\ddot{a}rts}$ der Tikhonov-Verteilung $t(.)$ gemäß Gleichung (35) zu normalisieren, so dass sie in Summe den Wert 1 ergeben.

$$\tilde{q}_{m,k}^{\phantom{m,k}vorw\ddot{a}rts} = \frac{q_{m,k}^{\phantom{m,k}vorw\ddot{a}rts}}{\sum_{m=0}^{M-1}q_{m,k}^{\phantom{m,k}vorw\ddot{a}rts}} \tag{35}$$

Als Anfangswert für die Vorwärts-Rekursion zur Bestimmung des komplexen Koeffizienten $z_k^{vorw\ddot{a}rts}$ der Tikhonov-Verteilung $t(.)$ wird ein Wert gemäß Gleichung (36) und zur Bestimmung des reellen Gewichtungsfaktors $q_{m,k}^{vorw\ddot{a}rts}$ Tikhonov-Verteilung $t(.)$ wird ein Wert gemäß Gleichung (37) benutzt.

$$z_0^{\phantom{0}vorw\ddot{a}rts} = \frac{r_k}{\sigma^2} \tag{36}$$

$$q_{m,0}{}^{vorwärts} = \delta_m = \begin{cases} 1 \\ 0 \end{cases} \text{für} \quad \begin{matrix} m = 0 \\ m \neq 0 \end{matrix} \qquad (37)$$

In analoger Weise lässt sich für die Rückwärts-Rekursion des komplexen Koeffizienten $z_{k-1}{}^{rückwärts}$ der Tikhonov-Verteilung $t(.)$ eine Rekursionsformel gemäß Gleichung (38) und für die Rückwärts-Rekursion des reellen Gewichtungsfaktors $q_{m,k}{}^{rückwärts}$ der Tikhonov-Verteilung $t(.)$ eine Rekursionsformel gemäß Gleichung (39) herleiten.

$$q_{m,k-1}{}^{rückwärts} = \sum_{i=0}^{M-1} P(a_k = e^{j\frac{2\pi}{M}i}) \cdot q_{(m+i)ModM,}{}^{rückwärts} \cdot e^{\left| z'_k{}^{rückwärts} \cdot e^{j\frac{2\pi}{M}m} + \frac{r_{k-1}}{\sigma^2} \right|} \quad \text{für}$$

$$m = 0, .., M-1 \qquad (38)$$

$$z_{k-1}{}^{rückwärts} = z'_k{}^{rückwärts} + \frac{r_{k-1}}{\sigma^2} \sum_{m=0}^{M-1} q_{m,k-1}{}^{rückwärts} \cdot e^{-j\frac{2\pi}{M}m} \qquad (39)$$

Die Normierung der in der Rückwärts-Rekursion ermittelten Gewichtungsfaktoren $q_{m,k}{}^{rückwarts}$ der Tikhonov-Verteilung $t(.)$ ergibt sich gemäß Gleichung (40). Der Anfangswert $z_K{}^{rückwärts}$ für die Rückwärts-Rekursion des komplexen Koeffizienten $z_K{}^{rückärts}$ der Tikhonov-Verteilun $t(.)$ ergibt sich gemäß Gleichung (41) und der Anfangswert $q_{m,K}{}^{rückwärts}$ des reellen Gewichtsfaktors $q_{m,k}{}^{rückwärts}$ der Tikhonov-Verteilung $t(.)$ ergibt sich gemäß Gleichung (42).

$$\tilde{q}_{m,k}{}^{rückwärts} = \frac{q_{m,k}{}^{rückwärts}}{\sum_{m=0}^{M-1} q_{m,k}{}^{rückwärts}} \qquad (40)$$

$$z_K{}^{rückwärts} = \frac{r_K}{\sigma^2} \qquad (41)$$

$$q_{m,K}{}^{rückwärts} = \delta_m = \begin{cases} 1 \\ 0 \end{cases} \text{für} \quad \begin{matrix} m = 0 \\ m \neq 0 \end{matrix} \qquad (42)$$

Der Ermittlung der extrinsischen Information gemäß Gleichung (43) werden die mathematischen Beziehungen für die Wahrscheinlichkeitsdichte $\psi_k(\theta_k)$ in der Vorwärts-Rekursion gemäß Gleichung (23) und für die Wahrscheinlichkeitsdichte $\psi_k(\theta_k)$ in der Rückwärts-Rekursion gemäß Gleichung (24) in die Gleichung (22) der extrinsischen Information eingeführt. Hierbei ist zu berücksichtigen, dass die Wahrscheinlichkeitsdichte $p(\theta_k|\theta_{k-1})$ für den Phasenwert $\theta_k$ des Übertragungskanals zum Symbolzeitpunkt $k$ bei bekannten Phasenwert $\theta_{k-1}$ des Übertragungskanals zum Symbolzeitpunkt $k$-1 einer Gauss-Verteilung mit dem Mittelwert $\theta_{k-1}$ und der Varianz $\sigma_\Delta^2$ genügt.

$$\varepsilon_{i,k} = \frac{P(a_k = e^{j\frac{2\pi}{M}i} | \underline{r})}{P(a_k = e^{j\frac{2\pi}{M}i})} = \sum_m \sum_l \tilde{q}_{m,k-1}{}^{vorwärts} \cdot \tilde{q}_{l,k}{}^{rückwärts} \int t(z_k{}^{rückwärts} \cdot e^{j\frac{2\pi}{M}l}; \theta_k + \frac{2\pi}{M}i) \cdot$$

$$\cdot \int t(z_{k-1}{}^{vorwärts} \cdot e^{j\frac{2\pi}{M}m}; \theta_{k-1}) \cdot g(\theta_{k-1}, \sigma_\Delta^2; \theta_k) d\theta_k d\theta_{k-1} \qquad (43)$$

Unter Verwendung der Näherung für die Faltung einer Tikhonov-Verteilung mit einer Gauss-Verteilung gemäß Näherung (27) und mit Einführung des modifizierten komplexen Koeffizienten $z'_{m,k}{}^{vorwärts}$ für die Tikhonov-Verteilung gemäß Gleichung (28) kann die Gleichung (43) in eine Näherung übergeführt werden, die durch Gleichung (44) genähert wird.

$$\varepsilon_{i,k} = \frac{P(a_k = e^{j\frac{2\pi}{M}i} | \underline{r})}{P(a_k = e^{j\frac{2\pi}{M}i})} = \sum_m \sum_l \tilde{q}_{m,k-1}{}^{vorwärts} \cdot \tilde{q}_{l,k}{}^{rückwärts} \int t(z_k{}^{rückwärts} \cdot e^{j\frac{2\pi}{M}l}; \theta_k + \frac{2\pi}{M}i) \cdot$$

$$\cdot t(z'_{k-1}{}^{vorwärts} \cdot e^{j\frac{2\pi}{M}m}; \theta_k) d\theta_k \qquad (44)$$

Die beiden Tikhonov-Verteilungsfunktionen in Gleichung (44) werden jeweils gemäß ihrer Definitions-Gleichung (25) dargestellt. Während die dabei auftretenden Bessel-Funktionen erster Ordnung vor das Integral gezogen werden, da sie keine Abhängigkeit vom Phasenwert $\theta_k$ aufweisen, werden die dabei auftretenden Exponentialfunktionen zu einer einzigen Exponentialfunktion zusammengefasst, die wiederum gemäß der Definitions-Gleichung (25) mit einer Tikhonov-Verteilungsfunktion und einer Bessel-Funktionen erster Ordnung beschrieben wird. Aus der mathematischen Beziehung für die extrinsische Information in Gleichung (44) entsteht somit unter Einführung der Zwischengröße $\tau(k,l,i,m) = z_k{}^{rückwärts} \cdot e^{j\frac{2\pi}{M}l} \cdot e^{-j\frac{2\pi}{M}i} + z'_{k-1}{}^{vorwärts} \cdot e^{j\frac{2\pi}{M}m}$ eine mathematische Beziehung gemäß Gleichung (45).

$$\varepsilon_{i,k} = \frac{P(a_k = e^{j\frac{2\pi}{M}i} | \underline{r})}{P(a_k = e^{j\frac{2\pi}{M}i})} = \frac{2\pi}{4\pi \cdot I_0(|z_k{}^{rückwärts}|) \cdot I_0(|z_{k-1}{}^{vorwärts}|)} \cdot \sum_m \sum_l \tilde{q}_{m,k-1}{}^{vorwärts} \cdot \tilde{q}_{l,k}{}^{rückwärts} \cdot$$

$$I_0(|\tau(k,l,i,m)|) \cdot \int t(\tau(k,l,i,m)d\theta_k \qquad (45)$$

Das Integral über den Phasenwert $\theta_k$ in Gleichung (45) ergibt den Wert 1. Die Bessel-Funktionen im Nenner der Gleichung (45) weisen keine Abhängigkeiten von der Laufindizes $m$ und $l$ auf und stellen deshalb irrelevante multiplikative Terme dar, die nicht weiter berücksichtigt werden. Die endgültige mathematische Beziehung für die extrinsische Information ergibt sich somit gemäß Gleichung (46).

$$\varepsilon_{i,k} = \frac{P(a_k = e^{j\frac{2\pi}{M}i} | \underline{r})}{P(a_k = e^{j\frac{2\pi}{M}i})} = \sum_m \sum_l \tilde{q}_{m,k-1}{}^{vorwärts} \cdot \tilde{q}_{l,k}{}^{rückwärts} \cdot I_0(|z'_{k-1}{}^{vorwärts} + z_k{}^{rückwärts} \cdot e^{j\frac{2\pi}{M}(l-m-i)}|)$$

$$(46)$$

Zur Reduzierung der Vielzahl von Summationen und Multiplikationen in den Rekursionsformeln der Gleichungen (32), (33), (35), (38), (39) und (40) und in der Gleichung (46) zur.Berechnung der extrinsischen Information sowie zur Einschränkung des Wertebereichs im Hinblick auf eine Signaldynamik-Reduktion wird im folgenden beispielhaft an der Vorwärts-Rekursion gezeigt, wie eine algorithmische Vereinfachung zu erzielen ist. Hierzu wird der in der Vorwärts-Rekursion ermittelte Gewichtungsfaktor $q_{m,k}{}^{vorwärts}$ der Tikhonov-Verteilung $t(.)$ gemäß Gleichung (32) logarithmiert. Der dabei gewonnene logarithmierte Gewichtungsfaktor $\eta_{m,k}{}^{vorwärts}$ der Tikhonov-Verteilung $t(.)$ ergibt sich gemäß Gleichung (47).

$$\eta_{m,k}{}^{vorwärts} = \ln\left(q_{m,k}{}^{vorwärts}\right) = \ln\left(\sum_{l=0}^{M-1} e^{(\gamma_{i,k} + \tilde{\eta}_{(m-i)ModM,k-1}{}^{vorwärts})}\right) + |z'_{k-1}{}^{vorwärts} \cdot e^{j\frac{2\pi}{M}m} + \frac{r_k}{\sigma^2}| \qquad (47)$$

Hierbei wird die Zwischengröße $\gamma_{i,k}$ gemäß Gleichung (48) als natürlicher Logarithmus der a-priori-Wahrscheinlichkeit der Symbol-Hypothese *i* für das übertragende Symbol $a_k$ zum Symbolzeitpunkt *k* und die Zwischengröße $\tilde{\eta}_{m,k}{}^{vowärts}$ gemäß Gleichung (49) als logarithmierter normierter und in der Vorwärts-Rekursion ermittelter Gewichtungsfaktor $\ln(\tilde{q}_{m,k}{}^{vorwärts})$ der Tikhonov-Verteilung *t(.)* eingeführt.

Gemäß Gleichung (49) kann der logarithmierte, normierte und in der Vorwärts-Rekursion ermittelte Gewichtungsfaktor $\ln(\tilde{q}_{m,k}{}^{vorwärts})$ der Tikhonov-Verteilung *t(.)* ausgehend von Gleichung (35) zur Normalisierung des in der Vorwärts-Rekursion ermittelten Gewichtungsfaktors $q_{m,k}{}^{vorwärts}$ der Tikhonov-Verteilung *t(.)* als Differenz des logarithmierten, nicht normierten und in der Vorwärts-Rekursion ermittelten Gewichtungsfaktor $q_{m,k}{}^{vorwärts}$ der Tikhonov-Verteilung *t(.)* und des hinsichtlich des Phasenfaktors *m* konstantem Faktors $C_k{}^{vorwärts}$ gemäß Gleichung (50) betrachtet werden.

$$\gamma_{i,k} = \ln(P(a_k = e^{j\frac{2\pi}{M}i})) \qquad (48)$$

$$\tilde{\eta}_{m,k}{}^{vorwärts} = \ln\left(\tilde{q}_{m,k}{}^{vorwärts}\right) = \eta_{m,k}{}^{vorwärts} - C_k{}^{vorwärts} \qquad (49)$$

$$C_k{}^{vorwärts} = \ln(\sum_{m=0}^{M-1} e^{\eta_{m,k}{}^{vorwärts}}) \qquad (50)$$

Zur Vereinfachung der mathematischen Beziehung in Gleichung (47) wird der Jacobi-Logarithmus gemäß Gleichung (51) eingeführt.

$$\ln(e^{x_1} + e^{x_1}) = \max\{x_1, x_2\} + \ln(1 + e^{-|x_1 + x_2|}) \qquad (51)$$

Der Jacobi-Logarithmus kann gemäß Gleichung (52) als modifizierte Maximalwert-Funktion **max\*{x₁,x₂}** betrachtet werden, die eine Maximalwert-Funktion **max{x₁,x₂}** um eine Korrektur-Funktion **g(x₁,x₂) = ln(1+e⁻|x1+x2|)** modifiziert.

$$\max^*\{x_1, x_2\} = \max\{x_1, x_2\} + g(x_1, x_2) \qquad (52)$$

Die modifizierte Maximalwert-Funktion **max\*{.}** kann ausgehend von Gleichung (52) für eine höhere Anzahl von Argumenten **x₁,x₂,...,xₙ** iterativ aus der modifizierten Maximalwert-Funktion **max\*{.} für** eine um das letzte Argument reduzierte Anzahl von Argumenten **x₁,x₂,...,xₙ₋₁** bestimmt werden.

$$\max^*\{x_1, x_2, ..., x_n\} = \max^*\{\max^*\{x_1, x_2, ..., x_{n-1}\}, x_n\} \qquad (53)$$

Der Jacobi-Logarithmus kann aber auch näherungsweise ohne Berechnung der Korrektur-Funktion g(.) gemäß Gleichung (54) bestimmt werden.

$$\ln(e^{x_1} + e^{x_2} + ... + e^{x_n}) = \max_2^*\{x_1, x_2, ..., x_n\} \approx \max\{x_1, x_2, ..., x_n\} \qquad (54)$$

Die Einführung des Jacobi-Logarithmus in der mathematischen Beziehung für den logarithmierten, in der Vorwärts-Rekursion ermittelten Gewichtungsfaktors $\eta_{m,k}{}^{vorwärts}$ gemäß Gleichung (47) in Kombination mit Gleichung (49) führt zu einer Vereinfachung gemäß Gleichung (55). Hierbei kann die Konstante $C_k{}^{vorwärts}$ vernachlässigt werden, da sie keine Abhängigkeit vom Phasenfaktor **m** aufweist.

$$\eta_{m,k}{}^{vorwärts} = \ln\left(q_{m,k}{}^{vorwärts}\right) = \max_{i}{}^{*}{}_{1(2)} \left\{\gamma_{i,k} + \tilde{\eta}_{(m-i)ModM,k-1}{}^{vorwärts} - C_k{}^{vorwärts}\right\} + $$

$$+ \left| z'_{k-1}{}^{vorwärts} \cdot e^{j\frac{2\pi}{M}m} + \frac{r_k}{\sigma^2} \right| \qquad\qquad (55)$$

Um die Normierung der Gewichtungsfaktoren in der Vorwärts-Rekursion gemäß Gleichung (35) und in der Rückwärts-Rekursion gemäß Gleichung (40), die jeweils eine rechenaufwändige Division und Summation beinhaltet, zu vermeiden, wird anstelle einer Normierung eine Maximalwert-Bestimmung durchgeführt. Hierzu wird gemäß Gleichung (56) der Phasenfaktor $\tilde{m}_k$ desjenigen in der Vorwärts-Rekursion ermittelten logarithmierten Gewichtungsfaktors $\eta_{m,k}{}^{vorwärts}$ der Tikhonov-Verteilung **t(.)** zum Symbolzeitpunkt **k** ermittelt, der maximal ist.

$$\tilde{m}_k = \arg\max_{m} \left\{\eta_{m,k}{}^{vorwärts}\right\} \qquad\qquad (56)$$

Bei Verwendung einzig des maximalen, in der Vorwärts-Rekursion ermittelten Gewichtungsfaktors $max\{q_{0,k}{}^{vorwärts},...,q_{M-1,k}{}^{vorwärts}\}$ der Tikhonov-Verteilung **t(.)** vereinfacht sich die Rekursion-Formel zur Bestimmung des in der Vorwärts-Rekursion ermittelten komplexen Koeffizienten $z_k{}^{vorwärts}$ der Tikhonov-Verteilung **t(.)** gemäß Gleichung (33) auf eine vereinfachte Rekursion-Formel gemäß Gleichung (57). In Gleichung (57) findet die in Gleichung (58) dargestellte Identität Anwendung, um eine Verbindung zwischen den Rekursionsformel zur Berechnung des Gewichtungsfaktors und des komplexen Koeffizienten der Tikhonov-Verteilung **t(.)** herzustellen.

$$z_k{}^{vorwärts} \approx z'_{k-1}{}^{vorwärts} + \frac{r_k}{\sigma^2} \cdot e^{-j\frac{2\pi}{M}\tilde{m}_k{}^{vorwärts}} \qquad\qquad (57)$$

$$\left| z'_{k-1}{}^{vorwärts} + \frac{r_k}{\sigma^2} \cdot e^{-j\frac{2\pi}{M}\tilde{m}_k{}^{vorwärts}} \right| = \left| z'_{k-1}{}^{vorwärts} \cdot e^{j\frac{2\pi}{M}\tilde{m}_k{}^{vorwärts}} + \frac{r_k}{\sigma^2} \right| \qquad\qquad (58)$$

Zur Vereinfachung der Berechnungsformel für die extrinsische Information wird in Gleichung (46) der neue Phasenfaktor **n=(l-m)mod M** eingeführt. Die Berechnungsformel für die extrinsische Information ergibt sich somit gemäß Gleichung (59).

$$\varepsilon_{l,k} = \frac{P(a_k = e^{j\frac{2\pi}{M}l} \mid \underline{r})}{P(a_k = e^{j\frac{2\pi}{M}l})} = \sum_n \sum_m \tilde{q}_{m\,\mathrm{mod}\,M,k-1}{}^{vorwärts} \cdot \tilde{q}_{(n+m)\,\mathrm{mod}\,M,k}{}^{rückwärts}$$

$$\cdot I_0\left( \left| z'_{k-1}{}^{vorwärts} + z_k{}^{rückwärts} \cdot e^{j\frac{2\pi}{M}(n-i)} \right| \right) =$$

$$= \sum_n I_0\left( \left| z'_{k-1}{}^{vorwärts} + z_k{}^{rückwärts} \cdot e^{j\frac{2\pi}{M}(n-i)} \right| \right) \cdot \sum_m \tilde{q}_{m\,\mathrm{mod}\,M,k-1}{}^{vorwärts} \cdot \tilde{q}_{(n+m)\,\mathrm{mod}\,M,k}{}^{rückwärts} \qquad (59)$$

Eine Logarithmierung der extrinsischen Information und eine Näherung der Bessel-Funktion erster Ordnung durch eine Exponentialfunktion ergibt ausgehend von Gleichung (59) die mathematische Beziehung für die logarithmierte

extrinsische Information $\lambda_{i,k}$ in Gleichung (60).

$$\lambda_{i,k} = \ln\left(\frac{P(a_k = e^{j\frac{2\pi}{M}i} \mid \underline{r})}{P(a_k = e^{j\frac{2\pi}{M}i})}\right) = \max_n{}^* \left\{ \left| z'_{k-1}{}^{vorw\ddot{a}rts} + z_k{}^{r\ddot{u}ckw\ddot{a}rts} \cdot e^{j\frac{2\pi}{M}(n-i)} \right| + \right.$$

$$\left. + \max_m{}^* \left\{ \eta_{m,k-1}{}^{vorw\ddot{a}rts} + \eta_{n+m,k}{}^{r\ddot{u}ckw\ddot{a}rts} \right\} \right\} \tag{60}$$

Unter Einführung des maximalen in Vorwärts- und Rückwärts-Rekursion ermittelten logarithmierten Gewichtungsfaktors $f_{n,k}$ im Symbolzeitpunkt $k$ und für den Phasenfaktor $n$ gemäß Gleichung (61) und der Zwischengröße $\mu_{n-i,k}$ im Symbolzeitpunkt $k$ und für den Phäsenfaktor $n-i$ gemäß Gleichung (62) ergibt sich die logarithmierte extrinsische Information $\lambda_{i,k}$ ausgehend von Gleichung (60) gemäß Gleichung (63).

$$f_{n,k} = \max_m{}^* \left\{ \eta_{m,k-1}{}^{vorw\ddot{a}rts} + \eta_{n+m,k}{}^{r\ddot{u}ckw\ddot{a}rts} \right\} \quad \text{für} \quad n = 0,...,M-1 \quad \text{und}$$

$$k = 1,...,K \tag{61}$$

$$\mu_{n-i,k} = \left| z'_{k-1}{}^{vorw\ddot{a}rts} + z_k{}^{r\ddot{u}ckw\ddot{a}rts} \cdot e^{j\frac{2\pi}{M}(n-i)} \right| \quad \text{für} \quad n = 0,...,M-1 \quad \text{und} \quad k = 1,...,K$$

$$\tag{62}$$

$$\lambda_{i,k} = \max_n{}^* \left\{ \mu_{n-i,k} + f_{n,k} \right\} \quad \text{für} \quad i = 0,...,M-1, \quad n = 0,...,M-1 \quad \text{und} \quad k = 1,...,K$$

$$\tag{63}$$

Die Einführung des modifizierten Phasenfaktors $v=n-i$ ergibt ausgehend von Gleichung (62) die Berechnungsformel für die Zwischengröße $\mu_{v,k}$ gemäß Gleichung (64) und ausgehend von Gleichung (63) die Berechnungsformel für die logarithmierte extrinsische Information $\lambda_{i,k}$ gemäß Gleichung (65).

$$\mu_{v,k} = \left| z'_{k-1}{}^{vorw\ddot{a}rts} + z_k{}^{r\ddot{u}ckw\ddot{a}rts} \cdot e^{j\frac{2\pi}{M}v} \right| \quad \text{für} \quad v = 0,...,M-1 \quad \text{und} \quad k = 1,...,K$$

$$\tag{64}$$

$$\lambda_{i,k} = \max_v{}^* \left\{ \mu_{v,k} + f_{v+i,k} \right\} \qquad \text{für} \quad i = 0,...,M-1, \quad v = 0,...,M-1$$

$$\text{und} \quad k = 0,...,K-1 \tag{65}$$

Zusammenfassend ergibt sich für den vereinfachten Detektionsalgorithmus eines differenziell M-PSK-modulierten Signals folgende Berechnungsformel:

Für die Vorwärts-Rekursion lassen sich der Anfangswert $\tilde{\eta}_{m,0}{}^{vorw\ddot{a}rts}$ des logarithmierten, normierten Gewichtungsfaktors $\tilde{\eta}_{m,k}{}^{vorw\ddot{a}rts}$ der Tikhonov-Verteilung $t(.)$ zum Symbolzeitpunkt 0 gemäß Gleichung (66), der Anfangswert $z_0{}^{vorw\ddot{a}rts}$ des komplexen Koeffizienten $z_k{}^{vorw\ddot{a}rts}$ der Tikhonov-Verteilung $t(.)$ zum Symbolzeitpunkt 0 gemäß Gleichung (67) und der Anfangswert $z'_0{}^{vorw\ddot{a}rts}$ des modifizierten komplexen Koeffizienten $z'_k{}^{vorw\ddot{a}rts}$ der Tikhonov-Verteilung $t(.)$ zum Symbolzeitpunkt 0 gemäß Gleichung (68) ermitteln.

$$\tilde{\eta}_{m,0}{}^{vorw\ddot{a}rts} = \begin{cases} 0 \\ -\infty \end{cases} \text{für} \quad \begin{matrix} m = 0 \\ m \neq 0 \end{matrix} \tag{66}$$

$$z_0{}^{vorw\ddot{a}rts} = \frac{r_0}{\sigma^2} \tag{67}$$

$$z'_0{}^{vorw\ddot{a}rts} = \frac{z_0{}^{vorw\ddot{a}rts}}{1 + \sigma_\Delta{}^2 \cdot \left| z_0{}^{vorw\ddot{a}rts} \right|} \tag{68}$$

Der logarithmierte und in einer Vorwärts-Rekursion ermittelte Gewichtungsfaktor $\eta_{m,k}{}^{vorw\ddot{a}rts}$ zum Symbolzeit-punkt $k$ ergibt sich gemäß Gleichung (69) unter Berücksichtigung der Gleichungen (70) und (71), die die Verbindung zur Vorwärts-Rekursion des komplexen Koeffizienten der Tikhonov-Verteilung $t(.)$ bilden.

$$\eta_{m,k}{}^{vorw\ddot{a}rts} = \max_i{}^*{}_{1(2)} \left\{ \gamma_{i,k} + \eta_{(m-i)ModM,k-1}{}^{vorw\ddot{a}rts} \right\} + \xi_{m,k}{}^{vorw\ddot{a}rts} \quad \text{für}$$

$$m = 0, ..., M-1, \quad i = 0, ..., M-1 \quad \text{und} \quad k = 1, ..., K-1 \tag{69}$$

$$\xi_{m,k}{}^{vorw\ddot{a}rts} = \left| \rho_{m,k}{}^{vorw\ddot{a}rts} \right| \quad \text{für}$$

$$m = 0, ..., M-1 \quad \text{und} \quad k = 1, ..., K-1 \tag{70}$$

$$\rho_{m,k}{}^{vorw\ddot{a}rts} = z_{k-1}{}^{vorw\ddot{a}rts} + \frac{r_k}{\sigma^2} \cdot e^{-j\frac{2\pi}{M}m} \quad \text{für}$$

$$m = 0, ..., M-1 \quad \text{und} \quad k = 1, ..., K-1 \tag{71}$$

Gemäß Gleichung (72) ergibt sich der in einer Vorwärts-Rekursion ermittelte komplexe Koeffizient $z_k{}^{vorw\ddot{a}rts}$ der Tikhonov Verteilung $t(.)$ zum Symbolzeitpunkt $k$ ausgehend vom Ergebnis der Gleichung (71) als die Zwischengröße $\rho_{\alpha k,k}{}^{vorw\ddot{a}rts}$ beim Phasenfaktor $\alpha_k$ zum Symbolzeitpunkt $k$, der gemäß Gleichung (73) dem Phasenfaktor $m$ des maximalen in einer Vorwärts-Rekursion ermittelten Gewichtungsfaktors $\max_m \left\{ \eta_{m,k}{}^{vorw\ddot{a}rts} \right\}$ der Tikhonov-Verteilung $t(.)$ zum Symbolzeitpunkt $k$ entspricht. Der modifizierte, in einer Vorwärts-Rekursion ermittelte komplexe Koeffizient $z'_k{}^{vorw\ddot{a}rts}$ der Tikhonov-Verteilung $t(.)$ zum Symbolzeitpunkt $k$ ergibt sich gemäß Gleichung (74).

$$z_k{}^{vorw\ddot{a}rts} = \rho_{\alpha_k,k}{}^{vorw\ddot{a}rts} \quad \text{für} \quad k = 0, ..., K-1 \tag{72}$$

$$\alpha_k = \arg\max_m \left\{ \eta_{m,k}{}^{vorw\ddot{a}rts} \right\} \quad \text{für} \quad k = 0, ..., K-1 \tag{73}$$

$$z'_k{}^{vorw\ddot{a}rts} = \frac{z_k{}^{vorw\ddot{a}rts}}{1 + \sigma_\Delta{}^2 \cdot \left| z_k{}^{vorw\ddot{a}rts} \right|} \quad \text{für} \quad k = 0, ..., K-1 \tag{74}$$

Für die Rückwärts-Rekursion lassen sich der Anfangswert $\tilde{\eta}_{m,k}^{rückwärts}$ des logarithmierten, normierten Gewichtungsfaktors $\tilde{\eta}_{m,k}^{rückwäts}$ der Tikhonov-Verteilung $t(.)$ zum Symbolzeitpunkt $K$ gemäß Gleichung (75), der Anfangswert $z_K^{rückwärts}$ des komplexen Koeffizienten $Z_K^{rückwärts}$ der Tikhonov-Verteilung $t(.)$ zum Symbolzeitpunkt $K$ gemäß Gleichung (76) und der Anfangswert $z'_K^{rückwärts}$ des modifizierten komplexen Koeffizienten $z'_K^{rückwärts}$ der Tikhonov-Verteilung $t(.)$ zum Symbolzeitpunkt $K$ gemäß Gleichung (77) ermitteln.

$$\tilde{\eta}_{m,K}^{rückwärts} = \begin{cases} 0 \\ -\infty \end{cases} \text{für} \quad \begin{matrix} m = 0 \\ m \neq 0 \end{matrix} \qquad\qquad (75)$$

$$z_K^{rückwärts} = \frac{r_K}{\sigma^2} \qquad\qquad (76)$$

$$z'_K{}^{rückwärts} = \frac{z_K^{rückwärts}}{1 + \sigma_\Delta^2 \cdot \left| z_K^{rückwärts} \right|} \qquad\qquad (77)$$

Der logarithmierte und in einer Vorwärts-Rekursion ermittelte Gewichtungsfaktor $\eta_{m,k-1}^{rückwärts}$ zum Symbolzeitpunkt $k$ -1 ergibt sich gemäß Gleichung (78) unter Berücksichtigung der Gleichungen (79) und (80), die die Verbindung zur Rückwärts-Rekursion des komplexen Koeffizienten der Tikhonov-Verteilung $t(.)$ bilden.

$$\eta_{m,k-1}^{rückwärts} = \max_{i \; 1(2)} {}^{\bullet} \left\{ \gamma_{i,k} + \eta_{(m+i)ModM,k}^{rückwärts} \right\} + \xi_{m,k-1}^{rückwärts} \quad \text{für}$$

$$m = 0,...,M-1 \quad \text{und} \quad k = 0,...,K-1 \qquad\qquad (78)$$

$$\xi_{m,k-1}^{rückwärts} = \left| \rho_{m,k-1}^{rückwärts} \right| \quad \text{für}$$

$$m = 0,...,M-1 \quad \text{und} \quad k = 0,...,K-1 \qquad\qquad (79)$$

$$\rho_{m,k-1}^{rückwärts} = z_k^{rückwärts} + \frac{r_{k-1}}{\sigma^2} \cdot e^{-j\frac{2\pi}{M}m} \quad \text{für}$$

$$m = 0,...,M-1 \quad \text{und} \quad k = 0,...,K-1 \qquad\qquad (80)$$

Gemäß Gleichung (81) wird der in einer Rückwärts-Rekursion ermittelte komplexe Koeffizient $z_{k-1}^{rückwärts}$ der Tikhonov Verteilung $t(.)$ zum Symbolzeitpunkt $k$-1 ausgehend vom Ergebnis der Gleichung (80) als Zwischengröße $\rho_{\beta k,k-1}^{rückwärts}$ im Symbolzeitpunkt $k$-1 beim Phasenfaktor $\beta_{k-1}$ im Symbolzeitpunkt $k$ -1 ermitteln, der gemäß Gleichung (82) dem Phasenfaktor $m$ des maximalen in einer Rückwärts-Rekursion ermittelten Gewichtungsfaktors $\max_m \left\{ \eta_{m,k-1}^{rückwärts} \right\}$ der Tikhonov-Verteilung $t(.)$ im Symbolzeitpunkt $k$-1 entspricht. Der modifizierte, in einer Rückwärts-Rekursion ermittelte komplexe Koeffizient $z'_{k-1}^{rückwärts}$ der Tikhonov-Verteilung $t(.)$ zum Symbolzeitpunkt $k$ -1 ergibt sich gemäß Gleichung (83).

$$z_{k-1}^{rückwärts} = \rho_{\beta_k,k-1}^{rückwärts} \quad \text{für} \quad k = 0,...,K-1 \qquad\qquad (81)$$

$$\beta_{k-1} = \arg\max_{m}\left\{\eta_{m,k-1}{}^{r\ddot{u}ckw\ddot{a}rts}\right\} \quad \text{für} \quad k = 0,...,K-1 \qquad (82)$$

$$z'_{k}{}^{r\ddot{u}ckw\ddot{a}rts} = \frac{z_{k}{}^{r\ddot{u}ckw\ddot{a}rts}}{1+\sigma_{\Delta}{}^{2}\cdot\left|z_{k}{}^{r\ddot{u}ckw\ddot{a}rts}\right|} \quad \text{für} \quad k = 0,...,K-1 \qquad (83)$$

Die extrinsische Information lässt sich gemäß der Gleichungen (61), (62) und (65) berechnen.

Im Folgenden wird das erfindungsgemäße Verfahren zur Bestimmung einer extrinsischen Information anhand des Flussdiagramms in Fig. 1 und die erfindungsgemäße Vorrichtung zur Bestimmung einer extrinsischen Information anhand des Blockdiagramms in Fig. 2 im Detail erläutert.

Im ersten Verfahrensschritt S10 werden die einzelnen Rekursion-Variablen initialisiert. Dies erfolgt anhand von Gleichung (65) für die insgesamt $M$ logarithmierten, normierten und in einer Vorwärts-Rekursion ermittelten Gewichtungsfaktoren $\tilde{\eta}_{m,0}{}^{vorwärts}$ der Tikhonov-Verteilung $t(.)$ zum Symbolzeitpunkt 0, anhand von Gleichung (67) für den in einer Vorwärts-Rekursion ermittelten komplexen Koeffizienten $z_{0}{}^{vorwärts}$ der Tikhonov-Verteilung $t(.)$ zum Symbolzeitpunkt 0, anhand von Gleichung (68) für den in einer Vorwärts-Rekursion ermittelten modifizierten komplexen Koeffizienten $z'_{k}{}^{vorwärts}$ der Tikhonov-Verteilung $t(.)$ zum Symbolzeitpunkt 0, anhand von Gleichung (75) für die insgesamt $M$ logarithmierten, normierten und in einer Rückwärts-Rekursion ermittelten Gewichtungsfaktoren $\tilde{\eta}_{m,K}{}^{rückwärts}$ der Tikhonov-Verteilung $t(.)$ zum Symbolzeitpunkt $K$, anhand von Gleichung (76) für den in einer Rückwärts-Rekursion ermittelten komplexen Koeffizienten $Z_{K}{}^{rückwarts}$ der Tikhonov-Verteilung $t(.)$ und anhand von Gleichung (77) für den in einer Rückwärts-Rekursion ermittelten modifizierten komplexen Koeffizienten $Z'_{K}{}^{rückwärts}$ der Tikhonov-Verteilung $t(.)$.

Im nächsten Verfahrensschritt S20 werden in einer Einheit 1 zur Ermittlung von logarithmierten Gewichtungsfaktoren in Vorwärts-Rekursion die insgesamt $M$ logarithmierten, in einer Vorwärts-Rekursion ermittelten Gewichtungsfaktoren $\eta_{m,k}{}^{vorwärts}$ der Tikhonov-Verteilung $t(.)$ für den jeweiligen Symbolzeitpunkt $k$ anhand der Rekursionsformel gemäß Gleichung (69) ermittelt. Hierzu wird der Jacobi-Logarithmus aus den einzelnen zu jeder Symbolhypothese $i$ jeweils gehörigen Summen von a-priori-Wahrscheinlichkeit $\gamma_{i,k}$ im jeweiligen Symbolzeitpunkt $k$ und von logarithmierten Gewichtungsfaktor $\eta_{(m-i)\bmod M,k-1}{}^{vorwärts}$ der Tikhonov-Verteilung $t(.)$ im vorherigen Symbolzeitpunkt $k$-1 berechnet. Zum Jacobi-Logarithmus wird der Betrag des im selben Symbolzeitpunkt $k$ in der Einheit 2 zur Ermittlung von komplexen Koeffizienten in Vorwärts-Rekursion ermittelten Zwischengröße $\rho_{m,k}{}^{vorwärts}$ addiert, die sich gemäß Gleichung (71) aus dem in einer Vorwärts-Rekursion ermittelten modifizierten, komplexen Koeffizienten $z'_{k-1}{}^{vorwärts}$ der Tikhonov-Verteilung $t(.)$ zum vorherigen Symbolzeitpunkt $k$-1 und dem Empfangssymbol $r_{k}$ zum Symbolzeitpunkt $k$ zusammensetzt und die zusätzlich in einem in Fig. 2 nicht dargestellten Zwischenspeicher für eine Weiterverarbeitung im folgenden Verfahrensschritt S30 zwischengespeichert wird.

Als Jacobi-Logarithmus kann die aus Maximalwert-Funktion $\textbf{max\{.\}}$ und Korrektur-Funktion $\textbf{g(.)}$ zusammengesetzte Variante $\textbf{max}_1\textbf{*\{.\}}$ des Jacobi-Logarithmus gemäß Gleichung (52) oder alternativ die einzig aus der Maximalwert-Funktion $\textbf{max\{.\}}$ bestehende Näherung $\textbf{max}_2\textbf{*\{.\}}$ gemäß Gleichung (53) verwendet werden.

Im nächsten Verfahrensschritt S30 wird in einer Einheit 2 zur Ermittlung des Phasenfaktors beim maximalen logarithmierten Gewichtungsfaktor in Vorwärts-Rekursion gemäß Gleichung (73) derjenige Phasenfaktor $\alpha_{k}$ zum Symbolzeitpunkt $k$ ermittelt, der zum maximalen in einer Vorwärts-Rekursion ermittelten logarithmierten Gewichtungsfaktor

$$\max_{m}\left\{\eta_{m,k}{}^{vorwärts}\right\}$$

der Tikhonov-Verteilung $t(.)$ im Symbolzeitpunkt $k$ aus allen insgesamt $M$ in einer Vorwärts-Rekursion ermittelten logarithmierten Gewichtungsfaktoren $\eta_{m,k}{}^{vorwärts}$ der Tikhonov-Verteilung $t(.)$ im Symbolzeitpunkt $k$ gehört.

Gemäß Gleichung (72) wird im selben Verfahrensschritt S30 in einer Einheit 3 zur Ermittlung von komplexen Koeffizienten in Vorwärts-Rekursion der in einer Vorwärts-Rekursion ermittelte komplexe Koeffizient $z_{k}{}^{vorwärts}$ der Tikhonov-Verteilung $t(.)$ im Symbolzeitpunkt $k$ aus der in Gleichung (71) ermittelten Zwischengröße $\rho_{\alpha k,k}$ beim im selben Verfahrensschritt S30 ermittelten Phasenfaktor $\alpha_{k}$ bestimmt. Der zugehörige in einer Vorwärts-Rekursion ermittelte modifizierte Koeffizient $z'_{k}{}^{vorwärts}$ der Tikhonov-Verteilung $t(.)$ im Symbolzeitpunkt $k$ ergibt sich gemäß Gleichung (74) aus dem soeben in einer Vorwärts-Rekursion ermittelten komplexen Koeffizienten $z_{k}{}^{vorwärts}$ der Tikhonov-Verteilung $t(.)$ im Symbolzeitpunkt $k$.

Im nächsten Verfahrensschritt S40 werden in einer Einheit 4 zur Ermittlung von logarithmierten Gewichtungsfaktoren in Rückwärts-Rekursion die insgesamt $M$ logarithmierten, in einer Rückwärts-Rekursion ermittelten Gewichtungsfaktoren $\eta_{m,k-1}{}^{rückwärts}$ der Tikhonov-Verteilung $t(.)$ im jeweils vorherigen Symbolzeitpunkt $k$-1 anhand der Rekursionsformel gemäß Gleichung (78) ermittelt. Hierbei wird ebenfalls der Jacobi-Logarithmus aus den einzelnen zur jeder Symbolhypothese $i$ jeweils gehörigen Summen von a-priori-Wahrscheinlichkeiten $\gamma_{i,k}$ im jeweiligen Symbolzeitpunkt

**k** und von logarithmierten in einer Rückwärts-Rekursion ermittelten Gewichtungsfaktoren $\eta_{m,k}{}^{rückwärts}$ der Tikhonov-Verteilung **t(.)** im vorherigen Symbolzeitpunkt **k-1** berechnet. Zum Jacobi-Logarithmus wird der Betrag des im selben Symbolzeitpunkt **k-1** in der Einheit 5 zur Ermittlung von komplexen Koeffizienten in Rückwärts-Rekursion ermittelten Zwischengröße $\rho_{m,k-1}{}^{rückwärts}$ addiert, die sich gemäß Gleichung (80) aus dem in einer Rückwärts-Rekursion ermittelten modifizierten, komplexen Koeffizienten $z'_k{}^{rückwarts}$ der Tikhonov-Verteilung **t(.)** zum Symbolzeitpunkt **k** und dem Empfangssymbol $r_{k-1}$ zum vorherigen Symbolzeitpunkt **k -1** zusammensetzt und die zusätzlich in einem in Fig. 2 nicht dargestellten Zwischenspeicher für eine Weiterverarbeitung im folgenden Verfahrensschritt S50 zwischengespeichert wird.

Im nächsten Verfahrensschritt S50 wird in einer Einheit 6 zur Ermittlung des Phasenfaktors beim maximalen logarithmierten Gewichtungsfaktor in Rückwärts-Rekursion gemäß Gleichung (82) derjenige Phasenfaktor $\beta_{k-1}$ im vorherigen Symbolzeitpunkt **k -1** ermittelt, der dem Phasenfaktor **m** des maximalen Gewichtungsfaktor

$$\max_m \left\{ \eta_{m,k-1}{}^{rückwärts} \right\}$$

von allen insgesamt **M** in einer Rückwärts-Rekursion ermittelten logarithmierten Gewichtungs-faktoren $\eta_{m,k}$-**1**$^{rückwärts}$ der Tikhonov-Verteilung **t(.)** im vorherigen Symbolzeitpunkt **k -1** entspricht.

Im darauf folgenden Verfahrensschritt S60 wird in einer Einheit 7 zur Ermittlung einer extrinsischen Information die zur Symbolhypothese **i** im Symbolzeitpunkt **k** gehörige logarithmierte extrinsische Information $\lambda_{i,k}$ gemäß der Gleichungen (61), (62) und (63) anhand der insgesamt **M** logarithmierten, in einer Vorwärts-Rekursion gemäß Verfahrensschritt S20 ermittelten Gewichtungsfaktoren $\eta_{m,k-1}{}^{rückwärts}$ der Tikhonov-Verteilung **t(.)** im vorherigen Symbolzeitpunkt **k-1**, die insgesamt **M** logarithmierten, in einer Rückwärts-Rekursion gemäß Verfahrensschritt S40 ermittelten Gewichtungsfaktoren $\eta_{m,k}{}^{rückwärts}$ der Tikhonov-Verteilung **t(.)** im Symbolzeitpunkt **k** des in einer Vorwärts-Rekursion gemäß Verfahrensschritt S30 ermittelten modifizierten komplexen Koeffizienten $z'_{k-1}{}^{rückwärts}$ der Tikhonov-Verteilung **t(.)** im vorherigen Symbolzeitpunkt **k -1** und des in einer Rückwärts-Rekursion gemäß Verfahrensschritt S50 ermittelten modifizierten komplexen Koeffizienten $z'_k{}^{rückwärts}$ der Tikhonov-Verteilung **t(.)** im Symbolzeitpunkt **k** berechnet. Hierbei findet der Jacobi-Logarithmus in der aus Maximalwert-Funktion **max{.}** und Korrektur-Funktion **g(.)** bestehenden Variante **max₁*{.}** gemäß Gleichung (52) oder in der einzig aus der Maximalwert-Funktion **max{.}** bestehenden Variante **max₂*{.}** gemäß Gleichung (53) Anwendung.

Im abschließenden optional durchzuführenden Verfahrensschritt S70 wird in einem Maximalwert-Detektor 8 die maximale a-posteriori-Wahrscheinlichkeit $\max_i \left\{ P(a_k = e^{j\frac{2\pi}{M}i} \mid \underline{r}) \right\}$ als maximale Summe

$$\max_i \left\{ \lambda_{i,k} + P(a_k = e^{j\frac{2\pi}{M}i}) \right\}$$

aus extrinsischer Information $\lambda_{i,k}$ und a-priori-Wahrscheinlichkeit $P(a_k = e^{j\frac{2\pi}{M}i})$

von allen insgesamt **M** zu jeweils einer Symbolhypothese **i** im Symbolzeitpunkt k gehörigen a-posteriori-Wahrscheinlichkeiten $P(a_k = e^{j\frac{2\pi}{M}i} \mid \underline{r})$ ermittelt. Die zu dieser maximalen a-posteriori-Wahrscheinlichkeit

$$\max_i \left\{ P(a_k = e^{j\frac{2\pi}{M}i} \mid \underline{r}) \right\}$$ lr)} gehörige Symbolhypothese **i** stellt den Schätzwert $\hat{\alpha}_k$ für das im Symbolzeitpunkt **k**

zu übertragende Symbol $\alpha_k$ dar.


**Patentansprüche**

1. Verfahren zur Bestimmung einer extrinsischen Information für eine Symbol-Hypothese eines Symbols in einem bestimmten Zeitpunkt, das einer differentiellen Phasenmodulation zugeführt und über einen Übertragungskanal mit einer zeitlich veränderlichen Phase übertragen wird, wobei die a-posteriori-Wahrscheinlichkeit der Phase bei einem positiv reell kodierten Symbol und bei einer bekannten Sequenz von Abtastwerten eines Empfangssignals einer Summe von mit einem Gewichtungsfaktor jeweils gewichteten und von einem komplexen Koeffizienten jeweils abhängigen Tikhonov-Verteilungen der Phase entspricht,
   **dadurch gekennzeichnet,**
   **dass** als extrinsisch Information zur Symbol-Hypothese zu jedem Zeitpunkt eine logarithmierte extrinsische Information verwendet wird und

**dass** zur Ermittlung der logarithmierten extrinsischen Information für die Symbol-Hypothese in dem Zeitpunkt ein logarithmierter Gewichtungsfaktor im vorherigen Zeitpunkt, der mit einer in positiver Zeitrichtung verlaufenden Rekursion aus dem im vorvorherigen Zeitpunkt ermittelten logarithmierten Gewichtungsfaktor bestimmt wird, und der komplexe Koeffizient der Tikhonov-Verteilung im vorherigen Zeitpunkt, der mit einer in positiver Zeitrichtung verlaufenden Rekursion aus dem im vorvorherigen Zeitpunkt ermittelten komplexen Koeffizient der Tikhonov-Verteilung bestimmt wird, verwendet werden.

2. Verfahren zur Bestimmung einer extrinsischen Information nach Anspruch 1,
**dadurch gekennzeichnet,**
**dass** der im vorherigen Zeitpunkt mit einer in positiver Zeitrichtung verlaufenden Rekursion ermittelte komplexe Koeffizient der Tikhonov-Verteilung aus der additiven Verknüpfung des im vorvorherigen Zeitpunkt mit einer in positiver Zeitrichtung verlaufenden Rekursion ermittelten komplexen Koeffizients der Tikhonov-Verteilung mit dem im vorherigen Zeitpunkt empfangenen Symbol bestimmt wird.

3. Verfahren zur Bestimmung einer extrinsischen Information nach Anspruch 1 oder 2,
**dadurch gekennzeichnet,**
**dass** der im vorherigen Zeitpunkt mit einer in positiver Zeitrichtung verlaufenden Rekursion ermittelte logarithmierte Gewichtungsfaktor mit einem Jacobi-Logarithmus aus den für jede Symbol-Hypothese jeweils ermittelten Summen aus einer logarithmierten a-priori-Wahrscheinlichkeit im vorherigen Zeitpunkt und dem im vorvorherigen Zeitpunkt mit einer in positiver Zeitrichtung verlaufenden Rekursion ermittelten logarithmierten Gewichtungsfaktor bestimmt wird.

4. Verfahren zur Bestimmung einer extrinsischen Information nach einem der Ansprüche 1 bis 3,
**dadurch gekennzeichnet,**
**dass** der zum im vorherigen Zeitpunkt mit einer in positiver Zeitrichtung verlaufenden Rekursion ermittelte logarithmierte Gewichtungsfaktor, der im vorvorherigen Zeitpunkt mit einer in positiver Zeitrichtung verlaufenden Rekursion ermittelte komplexe Koeffizient der Tikhonov-Verteilung, der mit einem Phasenterm der Phasenmodulation gewichtet ist, und das im vorherigen Zeitpunkt empfangene Symbol additiv verknüpft werden.

5. Verfahren zur Bestimmung einer extrinsischen Information nach einem der Ansprüche 1 bis 4,
**dadurch gekennzeichnet,**
**dass** für die Bestimmung des im vorherigen Zeitpunkt mit einer in positiver Zeitrichtung verlaufenden Rekursion ermittelten komplexen Koeffizients der Tikhonov-Verteilung der im vorvorherigen Zeitpunkt mit einer in positiver Zeitrichtung verlaufenden Rekursion ermittelte komplexe Koeffizient der Tikhonov-Verteilung mit demjenigen Phasenterm der Phasenmodulation gewichtet wird, dessen Phasenfaktor im vorherigen Zeitpunkt demjenigen Phasenfaktor entspricht, bei dem der im vorherigen Zeitpunkt mit einer in positiver Zeitrichtung verlaufenden Rekursion ermittelte logarithmierte Gewichtungsfaktor maximal ist.

6. Verfahren zur Bestimmung einer extrinsischen Information nach einem der Ansprüche 1 bis 5,
**dadurch gekennzeichnet,**
**dass** zur Ermittlung der logarithmierten extrinsischen Information für die Symbol-Hypothese im Zeitpunkt zusätzlich ein durch Logarithmierung des Gewichtungsfaktors im jeweiligen Zeitpunkt ermittelter logarithmierter Gewichtungsfaktor, der mit einer in negativer Zeitrichtung verlaufenden Rekursion aus dem im nachfolgenden Zeitpunkt ermittelten logarithmierten Gewichtungsfaktor bestimmt wird, und der komplexe Koeffizient der Tikhonov-Verteilung im jeweiligen Zeitpunkt, der mit einer in negativer Zeitrichtung verlaufenden Rekursion aus dem im nachfolgenden Zeitpunkt ermittelten komplexen Koeffizient der Tikhonov-Verteilung bestimmt wird, verwendet werden.

7. Verfahren zur Bestimmung einer extrinsischen Information nach Anspruch 6,
**dadurch gekennzeichnet,**
**dass** der im Zeitpunkt mit einer in negativer Zeitrichtung verlaufenden Rekursion ermittelte komplexe Koeffizient der Tikhonov-Verteilung aus der additiven Verknüpfung des im nachfolgenden Zeitpunkt mit einer in negativer Zeitrichtung verlaufenden Rekursion ermittelten komplexen Koeffizienten der Tikhonov-Verteilung mit dem im Zeitpunkt empfangenen Abtastwert des Empfangssignals bestimmt wird.

8. Verfahren zur Bestimmung einer extrinsischen Information nach Anspruch 6 oder 7,
**dadurch gekennzeichnet,**
**dass** der im Zeitpunkt mit einer in negativer Zeitrichtung verlaufenden Rekursion ermittelte logarithmierte Gewichtungsfaktor mit einem Jacobi-Logarithmus aus den für jede Symbol-Hypothese jeweils ermittelten Summen aus einer logarithmierten a-priori-Wahrscheinlichkeit im jeweiligen Zeitpunkt und dem im jeweiligen Zeitpunkt mit einer in negativer Zeitrichtung verlaufenden Rekursion ermittelten logarithmierten Gewichtungsfaktor bestimmt wird.

9. Verfahren zur Bestimmung einer extrinsischen Information nach einem der Ansprüche 6 bis 8,
**dadurch gekennzeichnet,**
**dass** zum im jeweiligen Zeitpunkt mit einer in negativer Zeitrichtung verlaufenden Rekursion ermittelten logarithmierten Gewichtungsfaktor der im nachfolgenden Zeitpunkt mit einer in positiver Zeitrichtung verlaufenden Rekursion ermittelte komplexe Koeffizient der Tikhonov-Verteilung, der mit einem Phasenterm der Phasenmodulation gewichtet ist, und der im Zeitpunkt empfangene Abtastwert des Empfangssignals additiv verknüpft wird.

10. Verfahren zur Bestimmung einer extrinsischen Information nach Anspruch 9,
**dadurch gekennzeichnet,**
**dass** zur Bestimmung des im jeweiligen Zeitpunkt mit einer in negativer Zeitrichtung verlaufenden Rekursion ermittelten komplexen Koeffizients der Tikhonov-Verteilung der im nachfolgenden Zeitpunkt mit einer in negativer Zeitrichtung verlaufenden Rekursion ermittelte komplexe Koeffizient der Tikhonov-Verteilung mit demjenigen Phasenterm der Phasenmodulation gewichtet wird, dessen Phasenfaktor im Zeitpunkt demjenigen Phasenfaktor entspricht, bei dem der zu diesem Zeitpunkt mit einer in negativer Zeitrichtung verlaufenden Rekursion ermittelte logarithmierte Gewichtungsfaktor maximal ist.

11. Verfahren zur Bestimmung einer extrinsischen Information nach einem der Ansprüche 6 bis 10,
**dadurch gekennzeichnet,**
**dass** zur Ermittlung der logarithmierten extrinsischen Information für die Symbol-Hypothese im Zeitpunkt ein für jeden modifizierten Phasenfaktor jeweils maximaler logarithmierter Gewichtungsfaktor als Jacobi-Logarithmus aus den für jeden Phasenfaktor jeweils ermittelten Summen aus dem im vorherigen Zeitpunkt mit einer in positiver Zeitrichtung verlaufenden Rekursion ermittelten logarithmierten Gewichtungsfaktor und dem im Zeitpunkt mit einer in negativer Zeitrichtung verlaufenden Rekursion ermittelten logarithmierten Gewichtungsfaktor bestimmt wird.

12. Verfahren zur Bestimmung einer extrinsischen Information nach einem der Ansprüche 6 bis 11,
**dadurch gekennzeichnet,**
**dass** zur Ermittlung der logarithmierten extrinsischen Information zur Symbol-Hypothese und im Zeitpunkt ein Jacobi-Logarithmus aus den für jeden modifizierten Phasenfaktor jeweils ermittelten Summen aus dem für den jeweiligen modifizierten Phasenfaktor jeweils maximalen logarithmierten Gewichtungsfaktor und unter Berücksichtigung des im vorherigen Zeitpunkt mit einer in positiver Zeitrichtung verlaufenden Rekursion ermittelten komplexen Koeffizienten der Tikhonov-Verteilung und des im Zeitpunkt mit einer in negativer Zeitrichtung verlaufenden Rekursion ermittelten komplexen Koeffizienten der Tikhonov-Verteilung bestimmt wird.

13. Verfahren zur Bestimmung einer extrinsischen Information nach Anspruch 3, 11 oder 12,
**dadurch gekennzeichnet,**
**dass** der Jacobi-Logarithmus jeweils eine Maximalwert-Funktion und eine Korrektur-Funktion enthält.

14. Verfahren zur Bestimmung einer extrinsischen Information nach Anspruch 3, 11 oder 12,
**dadurch gekennzeichnet,**
**dass** der Jacobi-Logarithmus jeweils nur eine Maximalwert-Funktion enthält.

15. Vorrichtung zur Bestimmung einer extrinsischen Information für eine Symbol-Hypothese eines Symbols in einem bestimmten Zeitpunkt, das einer Phasenmodulation zugeführt und über einen Übertragungskanal mit einer zeitlich veränderlichen Phase übertragen wird, mit einer Einheit (1) zur Ermittlung von logarithmierten Gewichtungsfaktoren in Vorwärtsrekursion,
einer Einheit (3) zur Ermittlung von komplexen Koeffizienten in Vorwärtsrekursion,
einer Einheit (4) zur Ermittlung von logarithmierten Gewichtungsfaktoren in Rückwärtsrekursion,
einer Einheit (5) zur Ermittlung von komplexen Koeffizienten in Rückwärtsrekursion,
einer Einheit (7) zur Ermittlung einer extrinsischen Information,
einer Einheit (2) zur Ermittlung des Phasenfaktors beim maximalen Gewichtungsfaktor in Vorwärtsrekursion und
eine Einheit (6) zur Ermittlung des Phasenfaktors beim maximalen Gewichtungsfaktor in Rückwärtsrekursion,
**dadurch gekennzeichnet,**
**dass** die Vorrichtung so ausgebildet ist, dass zur Ermittlung der logarithmierten extrinsischen Information für die Symbol-Hypothese in dem Zeitpunkt ein logarithmierter Gewichtungsfaktor im vorherigen Zeitpunkt, der mit einer in positiver Zeitrichtung verlaufenden Rekursion aus dem im vorvorherigen Zeitpunkt ermittelten logarithmierten Gewichtungsfaktor bestimmt wird, und der komplexe Koeffizient der Tikhonov-Verteilung im vorherigen Zeitpunkt, der mit einer in positiver Zeitrichtung verlaufenden Rekursion aus dem im vorvorherigen Zeitpunkt ermittelten komplexen Koeffizient der Tikhonov-Verteilung bestimmt wird, verwendet werden.

16. Computerprogramm mit Programmcode-Mitteln, um alle Schritte gemäß einem der Ansprüche 1 bis 14 durchführen zu können, wenn das Programm auf einem Computer oder einem digitalen Signalprozessor ausgeführt wird.

17. Computerprogramm-Produkt mit insbesondere auf einem maschinenlesbaren Träger gespeicherten Programmcode-Mitteln, um alle Schritte gemäß einem der Ansprüche 1 bis 14 durchführen zu können, wenn das Programm auf einem Computer oder einem digitalen Signalprozessor ausgeführt wird.

**Claims**

1. Method for determining an extrinsic information item for a symbol hypothesis for a symbol at a particular instant, which symbol is supplied to differential phase modulation and transmitted via a transmission channel with a time-variant phase, wherein the a-posteriori probability of the phase in the case of a symbol with positive real coding and in the case of a known sequence of samples of a received signal corresponds to a sum of Tikhonov distributions for the phase that are each weighted with a weighting factor and each dependent on a complex coefficient, **characterized**
in that the extrinsic information item used for the symbol hypothesis at each instant is a logarithmized extrinsic information item and
in that in order to ascertain the logarithmized extrinsic information item for the symbol hypothesis at the instant a logarithmized weighting factor at the previous instant, determined with a recursion running in the positive time direction from the logarithmized weighting factor ascertained at the instant before last, and the complex coefficient of the Tikhonov distribution at the previous instant, determined with a recursion running in the positive time direction from the complex coefficient of the Tikhonov distribution that is ascertained at the instant before last, are used.

2. Method for determining an extrinsic information item according to Claim 1,
**characterized**
in that the complex coefficient of the Tikhonov distribution that is ascertained at the previous instant with a recursion running in the positive time direction is determined from the additive logic combination of the complex coefficient of the Tikhonov distribution that is ascertained at the instant before last with a recursion running in the positive time direction and the symbol received at the previous instant.

3. Method for determining an extrinsic information item according to Claim 1 or 2,
**characterized**
in that the logarithmized weighting factor ascertained at the previous instant with a recursion running in the positive time direction is determined using a Jacobi logarithm from the sums, which are respectively ascertained for each symbol hypothesis, of a logarithmized a-priori probability at the previous instant and the logarithmized weighting factor ascertained at the instant before last with a recursion running in the positive time direction.

4. Method for determining an extrinsic information item according to one of Claims 1 to 3,
**characterized**
in that the logarithmized weighting factor ascertained at the previous instant with a recursion running in the positive time direction, the complex coefficient of the Tikhonov distribution that is ascertained at the instant before last with a recursion running in the positive time direction, which complex coefficient is weighted using a phase term from the phase modulation, and the symbol received at the previous instant are subjected to additive logic combination.

5. Method for determining an extrinsic information item according to one of Claims 1 to 4,
**characterized**
in that for the purpose of determining the complex coefficient of the Tikhonov distribution that is ascertained at the previous instant with a recursion running in the positive time direction the complex coefficient of the Tikhonov distribution that is ascertained at the instant before last with a recursion running in the positive time direction is weighted using that phase term from the phase modulation whose phase factor at the previous instant corresponds to that phase factor for which the logarithmized weighting factor ascertained at the previous instant with a recursion running in the positive time direction is at a maximum.

**6.** Method for determining an extrinsic information item according to one of Claims 1 to 5, **characterized in that** in order to ascertain the logarithmized extrinsic information item for the symbol hypothesis at the instant a logarithmized weighting factor that is ascertained by logarithmization of the weighting factor at the respective instant and that is determined from the logarithmized weighting factor ascertained at the subsequent instant with a recursion running in the negative time direction and the complex coefficient of the Tikhonov distribution at the respective instant that is determined from the complex coefficient of the Tikhonov distribution that is ascertained at the subsequent instant with a recursion running in the negative time direction are additionally used.

**7.** Method for determining an extrinsic information item according to Claim 6, **characterized in that** the complex coefficient of the Tikhonov distribution that is ascertained at the instant with a recursion running in the negative time direction is determined from the additive logic combination of the complex coefficient of the Tikhonov distribution that is ascertained at the subsequent instant with a recursion running in the negative time direction and the sample of the received signal that is received at the instant.

**8.** Method for determining an extrinsic information item according to Claim 6 or 7, **characterized in that** the logarithmized weighting factor ascertained at the instant with a recursion running in the negative time direction is determined using a Jacobi logarithm from the sums, which are respectively ascertained for each symbol hypothesis, of a logarithmized a-priori probability at the respective instant and the logarithmized weighting factor ascertained at the respective instant with a recursion running in the negative time direction.

**9.** Method for determining an extrinsic information item according to one of Claims 6 to 8, **characterized in that** for the logarithmized weighting factor ascertained at the respective instant with a recursion running in the negative time direction the complex coefficient of the Tikhonov distribution that is ascertained at the subsequent instant with a recursion running in the positive time direction and that is weighted using a phase term from the phase modulation and the sample of the received signal that is received at the instant are subjected to additive logic combination.

**10.** Method for determining an extrinsic information item according to Claim 9, **characterized in that** in order to determine the complex coefficient of the Tikhonov distribution that is ascertained at the respective instant with a recursion running in the negative time direction the complex coefficient of the Tikhonov distribution that is ascertained at the subsequent instant with a recursion running in the negative time direction is weighted using that phase term from the phase modulation whose phase factor at the instant corresponds to that phase factor for which the logarithmized weighting factor ascertained at this instant with a recursion running in the negative time direction is at a maximum.

**11.** Method for determining an extrinsic information item according to one of Claims 6 to 10, **characterized in that** in order to ascertain the logarithmized extrinsic information item for the symbol hypothesis at the instant a logarithmized weighting factor that is at a respective maximum for each modified phase factor is determined as a Jacobi logarithm from the sums, which are respectively ascertained for each phase factor, of the logarithmized weighting factor ascertained at the previous instant with a recursion running in the positive time direction and the logarithmized weighting factor ascertained at the instant with a recursion running in the negative time direction.

**12.** Method for determining an extrinsic information item according to one of Claims 6 to 11, **characterized in that** in order to ascertain the logarithmized extrinsic information item for the symbol hypothesis and at the instant a Jacobi logarithm is determined from the sums, which are respectively ascertained for each modified phase factor, of the logarithmized weighting factor that is at a respective maximum for the respective modified phase factor and taking account of the complex coefficient of the Tikhonov distribution that is ascertained at the previous instant with a recursion running in the positive time direction and the complex coefficient of the Tikhonov distribution that is ascertained at the instant with a recursion running in the negative time direction.

**13.** Method for determining an extrinsic information item according to Claim 3, 11 or 12,

**characterized**
**in that** the Jacobi logarithm respectively contains a maximum value function and a correction function.

14. Method for determining an extrinsic information item according to Claim 3, 11 or 12,
**characterized**
**in that** the Jacobi logarithm respectively contains just a maximum value function.

15. Apparatus for determining an extrinsic information item for a symbol hypothesis for a symbol at a particular instant, which symbol is supplied to phase modulation and transmitted via a transmission channel with a time-variant phase, having
a unit (1) for ascertaining logarithmized weighting factors in forward recursion,
a unit (3) for ascertaining complex coefficients in forward recursion,
a unit (4) for ascertaining logarithmized weighting factors in backward recursion,
a unit (5) for ascertaining complex coefficients in backward recursion,
a unit (7) for ascertaining an extrinsic information item,
a unit (2) for ascertaining the phase factor for the maximum weighting factor in forward recursion, and
a unit (6) for ascertaining the phase factor for the maximum weighting factor in backward recursion, **characterized**
**in that** the apparatus is in a form such that in order to ascertain the logarithmized extrinsic information item for the symbol hypothesis at the instant a logarithmized weighting factor at the previous instant, determined with a recursion running in the positive time direction from the logarithmized weighting factor ascertained at the instant before last, and the complex coefficient of the Tikhonov distribution at the previous instant, determined with a recursion running in the positive time direction from the complex coefficient of the Tikhonov distribution that is ascertained at the instant before last, are used.

16. Computer program having program code means in order to be able to perform all the steps according to one of Claims 1 to 14 when the program is executed on a computer or a digital signal processor.

17. Computer program product having program code means stored particularly on a machine-readable storage medium in order to be able to perform all the steps according to one of Claims 1 to 14 when the program is executed on a computer or a digital signal processor.

**Revendications**

1. Procédé de détermination d'une information extrinsèque pour une hypothèse de symbole d'un symbole qui est délivré à une modulation de phase différentielle et est transmis par l'intermédiaire d'un canal de transmission avec une phase variable dans le temps, dans lequel la probabilité a posteriori de la phase correspond à une somme des distributions de Tikhonov de la phase respectivement dépendantes d'un coefficient complexe et respectivement pondérées par un facteur de pondération dans le cas d'un symbole codé réel positif et dans le cas d'une séquence connue de valeurs échantillons d'un signal de réception,
**caractérisé en ce que**
une information extrinsèque logarithmée est utilisée en tant qu'information extrinsèque pour l'hypothèse de symbole à chaque temps et
**en ce que**, en vue de la détermination de l'information extrinsèque logarithmée pour l'hypothèse de symbole à un temps, un facteur de pondération logarithmé au temps précédent, qui est déterminé avec une récursion s'étendant dans une direction temporelle positive à partir du facteur de pondération logarithmé déterminé au temps pré-précédent, et le coefficient complexe de la distribution de Tikhonov au temps précédent, qui est déterminé avec une récursion s'étendant dans une direction temporelle positive à partir du coefficient complexe déterminé au temps pré-précédent de la distribution de Tikhonov, sont utilisés.

2. Procédé de détermination d'une information extrinsèque selon la revendication 1, **caractérisé en ce que**
le coefficient complexe déterminé au temps précédent avec une récursion s'étendant dans une direction temporelle positive de la distribution de Tikhonov est déterminé à partir de la combinaison supplémentaire du coefficient complexe déterminé au temps pré-précédent avec une récursion s'étendant dans une direction temporelle positive de la distribution de Tikhonov avec le symbole reçu au temps précédent.

3. Procédé de détermination d'une information extrinsèque selon la revendication 1 ou 2, **caractérisé en ce que**
le facteur de pondération logarithmé déterminé au temps précédent avec une récursion s'étendant dans une direction temporelle positive est déterminé avec un logarithme de Jacobi à partir des sommes déterminées respectivement pour chaque hypothèse de symbole à partir d'une probabilité a priori logarithmée au temps précédent et du facteur de pondération logarithmé déterminé au temps pré-précédent avec une récursion s'étendant dans une direction temporelle positive.

4. Procédé de détermination d'une information extrinsèque selon l'une des revendications 1 à 3, **caractérisé en ce que** le facteur de pondération logarithmé déterminé au temps précédent avec une récursion s'étendant dans une direction temporelle positive, le coefficient complexe déterminé au temps pré-précédent avec une récursion s'étendant dans une direction temporelle positive de la distribution de Tikhonov, qui est pondéré avec un terme de phase de la modulation de phase, et le symbole reçu au temps précédent sont combinés de façon supplémentaire.

5. Procédé de détermination d'une information extrinsèque selon l'une des revendications 1 à 4, **caractérisé en ce que** pour la détermination du coefficient complexe déterminé au temps précédent avec une récursion s'étendant dans une direction temporelle positive de la distribution de Tikhonov, le coefficient complexe déterminé au temps pré-précédent avec une récursion s'étendant dans une direction temporelle positive de la distribution de Tikhonov est pondéré avec ce terme de phase de la modulation de phase, dont le facteur de phase au temps précédent correspond à ce facteur de phase, dans lequel le facteur de pondération logarithmé déterminé au temps précédent avec une récursion s'étendant dans une direction temporelle positive est maximal.

6. Procédé de détermination d'une information extrinsèque selon l'une des revendications 1 à 5, **caractérisé en ce que** en vue de la détermination de l'information extrinsèque logarithmé pour l'hypothèse de symbole dans le temps, un facteur de pondération logarithmé déterminé par logarithmisation du facteur de pondération au temps respectif, qui est déterminé avec une récursion s'étendant dans une direction temporelle négative à partir du facteur de pondération logarithmé déterminé au temps suivant, et le coefficient complexe de la distribution de Tikhonov au temps respectif, qui est déterminé avec une récursion s'étendant dans une direction temporelle négative à partir du coefficient complexe déterminé au temps suivant de la distribution de Tikhonov, sont utilisés.

7. Procédé de détermination d'une information extrinsèque selon la revendication 6, **caractérisé en ce que** le coefficient complexe déterminé dans le temps avec une récursion s'étendant dans une direction temporelle négative de la distribution de Tikhonov est déterminé à partir de la combinaison supplémentaire du coefficient complexe déterminé au temps suivant avec une récursion s'étendant dans une direction temporelle négative de la distribution de Tikhonov avec la valeur échantillon reçue dans le temps du signal de réception.

8. Procédé de détermination d'une information extrinsèque selon la revendication 6 ou 7, **caractérisé en ce que** le facteur de pondération logarithmé déterminé dans le temps avec une récursion s'étendant dans une direction temporelle négative est déterminé avec un logarithme de Jacobi à partir des sommes déterminées respectivement pour chaque hypothèse de symbole à partir d'une probabilité a priori logarithmé au temps respectif et du facteur de pondération logarithmé déterminé au temps respectif avec une récursion s'étendant dans une direction temporelle négative.

9. Procédé de détermination d'une information extrinsèque selon l'une des revendications 6 à 8, **caractérisé en ce que** le coefficient complexe déterminé au temps suivant avec une récursion s'étendant dans une direction temporelle positive de la distribution de Tikhonov, qui est pondéré avec un terme de phase de la modulation de phase, et la valeur échantillon reçue dans le temps du signal de réception sont combinés de façon supplémentaire avec le facteur de pondération logarithmé déterminé au temps respectif avec une récursion s'étendant dans une direction temporelle négative.

10. Procédé de détermination d'une information extrinsèque selon la revendication 9, **caractérisé en ce que** en vue de la détermination du coefficient complexe déterminé au temps respectif avec une récursion s'étendant dans une direction temporelle négative de la distribution de Tikhonov, le coefficient complexe déterminé au temps suivant avec une récursion s'étendant dans une direction temporelle négative de la distribution de Tikhonov est pondéré avec ce terme de phase de la modulation de phase, dont le facteur de phase dans le temps correspond à ce facteur de phase, dans lequel le facteur de pondération logarithmé déterminé à ce temps avec une récursion s'étendant dans une direction temporelle négative est maximal.

11. Procédé de détermination d'une information extrinsèque selon l'une des revendications 6 à 10, **caractérisé en ce que** en vue de la détermination de l'information extrinsèque logarithmé pour l'hypothèse de symbole dans le temps, un facteur de pondération logarithmé maximal respectif pour chaque facteur de phase modifié est déterminé en tant que logarithme de Jacobi à partir des sommes déterminées respectivement pour chaque facteur de phase à partir du facteur de pondération logarithmé déterminé au temps précédent avec une récursion s'étendant dans une direction temporelle positive et du facteur de pondération logarithmé déterminé dans le temps avec une récursion s'étendant dans une direction temporelle négative.

12. Procédé de détermination d'une information extrinsèque selon l'une des revendications 6 à 11, **caractérisé en ce que** en vue de la détermination de l'information extrinsèque logarithmé pour une hypothèse de symbole et dans le temps un logarithme de Jacobi est déterminé à partir des sommes déterminées respectivement pour chaque facteur de phase modifié à partir du facteur de pondération logarithmé maximal respectif pour le facteur de phase modifié respectif et compte tenu du coefficient complexe déterminé au temps précédent avec une récursion s'étendant dans une direction temporelle positive de la distribution de Tikhonov et du coefficient complexe déterminé dans le temps avec une récursion se étendant dans une direction temporelle négative de la distribution de Tikhonov.

13. Procédé de détermination d'une information extrinsèque selon la revendication 3, 11 ou 12, **caractérisé en ce que** le logarithme de Jacobi contient respectivement une fonction de valeur maximale et une fonction de correction.

14. Procédé de détermination d'une information extrinsèque selon la revendication 3, 11 ou 12, **caractérisé en ce que** le logarithme de Jacobi contient respectivement uniquement une fonction de valeur maximale.

15. Dispositif pour déterminer une information extrinsèque pour une hypothèse de symbole d'un symbole à un temps déterminé, qui est délivré à une modulation de phase et est transmis par l'intermédiaire d'un canal de transmission avec une phase variable dans le temps, comportant
une unité (1) pour déterminer des facteurs de pondération logarithmés dans une récursion avant,
une unité (3) pour déterminer des coefficients complexes dans une récursion avant,
une unité (4) pour déterminer des facteurs de pondération logarithmés dans une récursion arrière,
une unité (5) pour déterminer des coefficients complexes dans une récursion arrière,
une unité (7) pour déterminer une information extrinsèque,
une unité (2) pour déterminer le facteur de phase dans le cas d'un facteur de pondération maximal dans une récursion avant et
une unité (6) pour déterminer le facteur de phase dans le cas d'un facteur de pondération maximal dans une récursion arrière,
**caractérisé en ce que**
le dispositif est réalisé de sorte que, pour une détermination de l'information extrinsèque logarithmée pour l'hypothèse de symbole dans le temps, un facteur de pondération logarithmé au temps précédent qui est déterminé avec une récursion s'étendant dans une direction temporelle positive à partir du facteur de pondération logarithmé déterminé au temps pré-précédent, et le coefficient complexe de la distribution de Tikhonov au temps précédent, qui est déterminé avec une récursion s'étendant dans une direction temporelle positive à partir du coefficient complexe déterminé au temps pré-précédent de la distribution de Tikhonov, sont utilisés.

16. Programme informatique comportant des moyens de code de programme, afin de pouvoir effectuer toutes les étapes selon l'une des revendications 1 à 14, lorsque le programme est exécuté sur un ordinateur ou un processeur de signal numérique.

17. Produit de programme informatique comportant en particulier des moyens de code de programme mémorisés sur un support pouvant être lu par une machine, afin de pouvoir effectuer toutes les étapes selon l'une des revendications 1 à 14, lorsque le programme est exécuté sur un ordinateur ou un processeur de signal numérique.

```
        ( Start )
           │
           ▼
┌──────────────────────────────────────────────────┐
│ Initialisieren der logarithmierten                │
│ Gewichtungsfaktoren, des komplexen                │ ─── S10
│ Koeffizienten und des modifizierten komplexen     │
│ Koeffizienten der Tikhonov-Verteilung für die     │
│ Vorwärts- und Rückwärts-Rekursion                 │
└──────────────────────────────────────────────────┘
           │
           ▼
┌──────────────────────────────────────────────────┐
│ Ermitteln des logarithmierten Gewichtungsfaktors  │
│ für jeden Phasenfaktor im jeweiligen              │ ─── S20
│ Symbolzeitpunkt mittels Vorwärts-Rekursion        │
└──────────────────────────────────────────────────┘
           │
           ▼
┌──────────────────────────────────────────────────┐
│ Ermitteln des komplexen Koeffizienten im          │
│ jeweiligen Symbolzeitpunkt mittels                │
│ Vorwärts-Rekursion für den Phasenfaktor, bei dem  │ ─── S30
│ der im selben Symbolzeitpunkt ermittelte          │
│ logarithmierte Gewichtungsfaktor maximal ist      │
└──────────────────────────────────────────────────┘
           │
           ▼
┌──────────────────────────────────────────────────┐
│ Ermitteln des logarithmierten Gewichtungsfaktor   │
│ für jeden Phasenfaktor im jeweiligen              │ ─── S40
│ Symbolzeitpunkt mittels Rückwärts-Rekursion       │
└──────────────────────────────────────────────────┘
           │
           ▼
┌──────────────────────────────────────────────────┐
│ Ermitteln des komplexen Koeffizienten im          │
│ jeweiligen Symbolzeitpunkt mittels                │
│ Rückwärts-Rekursion für den Phasenfaktor, bei dem │ ─── S50
│ der im selben Symbolzeitpunkt ermittelte          │
│ logarithmierte Gewichtungsfaktor maximal ist      │
└──────────────────────────────────────────────────┘
           │
           ▼
┌──────────────────────────────────────────────────┐
│ Ermitteln der extrinsischen Information für jede   │
│ Symbol-Hypothese im jeweiligen Symbolzeitpunkt    │
│ mittels der in einer Vorwärts- und Rückwärts-     │ ─── S60
│ Rekursion jeweils ermittelten logarithmierten     │
│ Gewichtungsfaktoren und komplexen Koeffizienten   │
│ der Tikhonov-Verteilung                           │
└──────────────────────────────────────────────────┘
           │
           ▼
┌──────────────────────────────────────────────────┐
│ Schätzen des zum jeweiligen Zeitpunkt zu          │
│ übertragenden Symbols als die zur maximalen       │
│ Summe aus extrinsischer Information und a-priori- │ ─── S70
│ Wahrscheinlichkeit im jeweiligen Symbolzeitpunkt  │
│ gehörige Symbol-Hypothese                         │
└──────────────────────────────────────────────────┘
           │
           ▼
        ( Ende )
```

## Fig. 1

Einheit zur Ermittlung
von logarithmierten
Gewichtungsfaktoren in
Vorwärts-Rekursion — 1

Einheit zur Ermittlung des
Phasenfaktors beim
maximalen logarithmierten
Gewichtungsfaktor in
Vorwärts-Rekursion — 2

vorwärts
$\eta_{n,k-1}$

$P(a_k)$

$\underline{r}$

3 — Einheit zur Ermittlung
von komplexen
Koeffizienten in
Vorwärts-Rekursion

7

Einheit zur Ermittlung
einer extrinsischen
Information

$\lambda_{i,k}$

8

Maximalwert-
Detektor

$\hat{\alpha}_k$

$\alpha_k$

$z_{k-1}$ vorwärts

$z_k$ rückwärts

$\beta_{n-1}$

6

Einheit zur Ermittlung
von komplexen
Koeffizienten in
Rückwärts-Rekursion

5

Einheit zur Ermittlung des
Phasenfaktors beim
maximalen logarithmierten
Gewichtungsfaktor in
Rückwärts-Rekursion

rückwärts
$\eta_{n+m,k}$

$P(a_k = e^{j\frac{2\pi}{M}i})$

Einheit zur Ermittlung
von logarithmierten
Gewichtungsfaktoren in
Rückwärts-Rekursion — 4

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **BARBIERI A. et al.** Soft-Output Decoding of Rotationally Invariant Codes Over Channels with Phase Noise. *IEEE Transactions on Communications,* November 2007, vol. 55 (11), 2125-2133

- **JOHN PROAKIS.** Digital Communications. McGraw-Hill, 01. Januar 2001, vol. 3, 242-243